# EUROPEAN PATENT APPLICATION

(11) **EP 4 464 488 A2**
(43) Date of publication of application: **20.11.2024**
(21) Application number: 24171996.2
(22) Date of filing: 23.04.2024
(51) Int. Cl.: B29C 33/02, B29C 35/00, C04B 35/83

(54) **HEAT TREATMENT OF FIBROUS PREFORMS VIA FLUID FLOW SYSTEMS AND METHODS**

(30) Priority: 25.04.2023 US 202318306930
(71) Applicant: Rohr, Inc., Chula Vista, CA 91910-2098 (US)
(72) Inventor: PUJAR, Vijay V., San Diego (US); NEWTON, Kirk Christopher, Vail (US); WAUGH, Katherine E., San Diego (US); KOROLY, Christopher C., Spring Valley (US); LAYMAN, Ronald Curtis, Tucson (US); LEMANSKI, Joseph R., Chula Vista (US)
(74) Representative: Dehns

(57) **Abstract**

Systems and methods for performing an in-tool carbonization process including exotherm control on a fibrous preform (110) includes one or more temperature control channels (130, 132) disposed in a heat treatment tooling fixture (100). A fluid may be moved through the temperature control channel(s) for controlling a temperature of the fibrous preform as the fibrous preform is heated during carbonization. A fluid source (140), a valve arrangement, and one or more heaters (234, 235) can be controlled for regulating a temperature and/or flow rate of fluid through the temperature control channel(s). In this manner, the fibrous preform may be uniformly brought to an exotherm temperature range such that shrinking of the fibrous preform occurs simultaneously and uniformly throughout the fibrous preform. The temperature control channels can be grouped by geographic location for zoned temperature control. The carbonization process can be performed using a single composite fixture or using both metallic and composite fixtures.

## Description

### TECHNICAL FIELD

The present disclosure relates to carbon/carbon composites, and more specifically, to systems and methods for manufacturing carbon/carbon (C/C) composites.

### BACKGROUND

Composite bodies are utilized in various industries, including the aerospace industry. C/C composites may be produced utilizing oxidized polyacrylonitrile (PAN) fiber-based preforms followed by heat treatment and chemical vapor infiltration (CVI) densification. During the heat-treatment process, the preform is heated to remove the non-carbon chemical species from the preform, thereby converting the OPF to carbon.

### SUMMARY

According to various embodiments, a zoned heat treatment tooling fixture arrangement is disclosed, comprising, a heat treatment tooling fixture configured to receive a fibrous preform, and at least one zone. Each zone comprises a plurality of temperature control channels disposed in the heat treatment tooling fixture and configured to receive a fluid for regulating a temperature of the fibrous preform, an inlet temperature sensor configured to measure an inlet temperature of the fluid entering the plurality of temperature control channels, and an outlet temperature sensor configured to measure an exit temperature of the fluid exiting the plurality of temperature control channels. A controller is configured to receive a first signal from the inlet temperature sensor and a second signal from the outlet temperature sensor, wherein the first signal corresponds to the inlet temperature of the fluid entering the plurality of temperature control channels and the second signal corresponds to the exit temperature of the fluid exiting the plurality of temperature control channels. The controller is configured to monitor the first signal and the second signal for regulating a flow rate of the fluid and/or a temperature of the fluid.

In various embodiments, the fluid comprises an inert gas. In various embodiments, the fluid may comprise of one or more of the byproduct gases generated by the chemical conversion of an oxidized polyacrylonitrile fiber to carbon, wherein the byproduct gases may comprise of at least one of hydrogen, nitrogen, HCN, water vapor, ammonia or carbon oxide (CO or CO2).

In various embodiments, the at least one zone comprises a first zone and a second zone (i.e., the zoned heat treatment tooling fixture arrangement comprises a first zone and a second zone). The first zone comprises a first plurality of temperature control channels disposed in the heat treatment tooling fixture and configured to receive a first fluid for regulating a first temperature of the fibrous preform, a first inlet temperature sensor configured to measure an inlet temperature of the first fluid entering the first plurality of temperature control channels, and a first outlet temperature sensor configured to measure an exit temperature of the first fluid exiting the first plurality of temperature control channels. The second zone comprises a second plurality of temperature control channels disposed in the heat treatment tooling fixture and configured to receive a second fluid for regulating a second temperature of the fibrous preform, a second inlet temperature sensor configured to measure an inlet temperature of the second fluid entering the second plurality of temperature control channels, and a second outlet temperature sensor configured to measure an exit temperature of the second fluid exiting the second plurality of temperature control channels. The controller is further configured to receive a third signal from the second inlet temperature sensor and a fourth signal from the second outlet temperature sensor, wherein the third signal corresponds to the inlet temperature of the second fluid entering the second plurality of temperature control channels and the fourth signal corresponds to the exit temperature of the second fluid exiting the second plurality of temperature control channels. In various embodiments, the controller is further configured to monitor the third signal and the fourth signal for regulating the flow rate of the first fluid, the temperature of the first fluid, a flow rate of the second fluid, and/or a temperature of the second fluid. In various embodiments, the controller is configured to calculate a difference between the exit temperature of the first fluid exiting the first plurality of temperature control channels and the exit temperature of the second fluid exiting the second plurality of temperature control channels, and, based upon the difference, regulate at least one of the flow rate or the temperature in at least one of the fluid, the first fluid or the second fluid.

In various embodiments, the controller is configured to regulate at least one of the flow rate of the first fluid or the temperature of the first fluid to evenly bring the fibrous preform to a predetermined temperature, and / or the controller is configured to regulate at least one of the flow rate of the second fluid or the temperature of the second fluid to evenly bring the fibrous preform to a predetermined temperature, and / or the controller is configured to regulate at least one of the flow rate of the fluid or the temperature of the fluid to evenly bring the fibrous preform to a predetermined temperature.

In various embodiments, a concentration of the plurality of temperature control channels is higher near a middle of the heat treatment tooling fixture and decreases toward an outside edge of the heat treatment tooling fixture.

According to various embodiments, a method for performing a heat treatment process on a fibrous preform comprising oxidized polyacrylonitrile fiber is disclosed. The method comprises positioning the fibrous preform in a heat treatment tooling fixture, positioning the fibrous preform and the heat treatment tooling fixture such that the fibrous preform is in an inert environment, moving a first fluid through a first temperature control channel disposed in the heat treatment tooling fixture to heat the fibrous preform, and at least partially converting a fiber of the fibrous preform to carbon in response to heating the fibrous preform with the first fluid.

In various embodiments, the method further comprises moving a second fluid through a second temperature control channel disposed in the heat treatment tooling fixture to heat the fibrous preform. In various embodiments, the method further comprises measuring a first outlet temperature of the first fluid, measuring a second outlet temperature of the second fluid, and varying at least one of a flow rate or a temperature of at least one of the first fluid and the second fluid based on the first outlet temperature and the second outlet temperatures.

In various embodiments, the fibrous preform is heated to an elevated temperature. In various embodiments, a primary exotherm can occur at a first temperature and a secondary exotherm can occur at a second temperature.

In various embodiments, the first temperature control channel is in fluid communication with the fibrous preform and the first fluid is directed at least partially through the fibrous preform. In various embodiments, the first fluid further comprises of at least one of an inert gas or a byproduct from the conversion of the oxidized polyacrylonitrile fiber to carbon.

In various embodiments, the method further comprises opening a valve to direct the first fluid through a heater to heat the first fluid.

In various embodiments, the method is performed externally from (i.e., outside of) a heat treatment furnace.

According to various embodiments, a method for performing a heat treatment process on a fibrous preform comprising stabilized polyacrylonitrile fiber is disclosed. The method comprises positioning the fibrous preform in a metallic heat treatment tooling fixture, positioning the fibrous preform and tooling arrangement such that the fibrous preform is in an inert environment, moving a fluid through a first temperature control channel disposed in the metallic heat treatment tooling fixture to control a temperature of the fibrous preform, heating the fibrous preform to a first temperature while the fibrous preform is in the metallic heat treatment tooling fixture to at least partially carbonize the fibrous preform, moving the partially carbonized preform from the metallic heat treatment tooling fixture to a non-metallic heat treatment tooling fixture, and heating the fibrous preform to a second temperature while the fibrous preform is in the composite heat treatment tooling fixture, wherein the second temperature is greater than the first temperature. In various embodiments, the non-metallic heat treatment tooling fixture may be a CVI-tooling fixture, wherein in the fixture is configured with a plurality of holes for transporting reactive gases for densification of the preform via chemical vapor infiltration. In various embodiments, when the first heat-treatment is performed in a metallic fixture and the preform has undergone most of the shrinkage and weight loss, the second heat-treatment may be performed in a CVI tooling fixture, and the second heat-treatment process may be combined with the CVI process in the same cycle. That is, the preform is heated to the second temperature, cooled down to the CVI temperatures and densified by CVI.

In various embodiments, the method further comprises clamping opposing lateral ends of the fibrous preform to the metallic heat treatment tooling fixture and applying tension to the fibrous preform while the fibrous preform is heated to the first temperature.

In various embodiments, heating the fibrous preform to the first temperature is performed with a cartridge heater disposed in a second temperature control channel of the metallic heat treatment tooling fixture.

In various embodiments, the method further comprises opening a valve to direct the fluid through a heater, wherein heating the fibrous preform to the first temperature is performed with the fluid.

In various embodiments, the method further comprises measuring a temperature with a temperature sensor and varying a temperature of the fibrous preform based upon the temperature. In various embodiments, the method further comprises measuring a flow rate of the fluid with a flow sensor and varying a flow rate in the temperature control channel to regulate the temperature of the fibrous preform based upon one or more temperature sensors placed proximate to the preform.

The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

FIG. 1 is a schematic illustration of a heat treatment tooling fixture arrangement, in accordance with various embodiments;
FIG. 2 is a schematic illustration of a heat treatment tooling fixture arrangement during carbonization with temperature control channels receiving associated flows of a fluid for controlling exotherms in the fibrous preform, in accordance with various embodiments;
FIG. 3 is a flow diagram of a method for controlling exotherms in a fibrous preform during a carbonization process, in accordance with various embodiments;
FIG. 4A is a schematic sectional illustration of a heat treatment tooling fixture with its wedge applying compression forces to its first and second plugs (in a closed or partially closed position) and comprising temperature control channels disposed therein for controlling exotherms in the fibrous preform, in accordance with various embodiments;
FIG. 4B is a schematic sectional illustration of the system of FIG. 4A with its wedge moved with respect to the first and second plugs to compress the fibrous preform (in a closed position), in accordance with various embodiments;
FIG. 5 is a perspective illustration of a wedge including a plurality of channels for defining, together with the channels in the plug, temperature control channels in the heat treatment tooling fixture, in accordance with various embodiments;
FIG. 6 is a perspective illustration of a plug including a plurality of channels for defining, together with the channels in the wedge, temperature control channels in the heat treatment tooling fixture, in accordance with various embodiments;
FIG. 7 is a perspective illustration of a female forming tool (a female die) including a plurality of temperature control channels extending therethrough, in accordance with various embodiments;
FIG. 8 is a perspective illustration of a female forming tool (a female die) including a plurality of temperature control channels disposed on an outer surface thereof, in accordance with various embodiments;
FIG. 9A is a perspective illustration of a heat treatment tooling fixture arrangement with a plurality of temperature control channels disposed in the female forming tool, in accordance with various embodiments;
FIG. 9B is a perspective illustration of the heat treatment tooling fixture arrangement with a plurality of independently controlled groups (or zones) of temperature control channels disposed in the female forming tool, in accordance with various embodiments;
FIG. 9C is a schematic illustration of the heat treatment tooling fixture arrangement including the temperature and flow control for the plurality of independently controlled groups (or zones) of temperature control channels, in accordance with various embodiments;
FIG. 10A is a perspective illustration of a heat treatment tooling fixture arrangement with a plurality of temperature control channels extending through a bottom surface of the female forming tool, in accordance with various embodiments;
FIG. 10B is a section illustration of a temperature control channel extending through the female forming tool and in fluid communication with the fibrous preform, in accordance with various embodiments;
FIG. 10C and FIG. 10D are a section illustrations of temperature control channels extending through the female forming tool and direct impingement fluid flow paths for a temperature control fluid through the fibrous preform, in accordance with various embodiments;
FIG. 10E is a section illustration of temperature control channels extending through the female forming tool and concentrated near a center of the female forming tool, in accordance with various embodiments;
FIG. 11 is a flow diagram of a two-step method for carbonization with exotherm control for a fibrous preform, in accordance with various embodiments;
FIG. 12A is a perspective illustration of a metallic heat treatment tooling fixture arrangement, in accordance with various embodiments;
FIG. 12B is a schematic illustration of an active temperature control arrangement comprising cartridge heaters for the metallic heat treatment tooling fixture arrangement, in accordance with various embodiments, in particular to actively regulate the temperature of the preform during an exotherm; and
FIG. 12C is a schematic illustration of an active temperature control arrangement comprising fluid flow paths and pressure sensors for the metallic heat treatment tooling fixture arrangement, in accordance with various embodiments.

### DETAILED DESCRIPTION

All ranges and ratio limits disclosed herein may be combined. It is to be understood that unless specifically stated otherwise, references to "a," "an," and/or "the" may include one or more than one and that reference to an item in the singular may also include the item in the plural.

The detailed description of exemplary embodiments herein makes reference to the accompanying drawings, which show exemplary embodiments by way of illustration and its best mode, and not of limitation. While these exemplary embodiments are described in sufficient detail to enable those skilled in the art to practice the invention, it should be understood that other embodiments may be realized and that logical, chemical and mechanical changes may be made without departing from the spirit and scope of the invention. For example, the steps recited in any of the method or process descriptions may be executed in any order and are not necessarily limited to the order presented. Moreover, many of the functions or steps may be outsourced to or performed by one or more third parties. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

As used herein, "fiber volume ratio" means the ratio of the volume of the fibers of the fibrous preform to the total volume of the fibrous preform. For example, a fiber volume ratio of 25% means the volume of the fibers in the fibrous preform is 25% of the total volume of fibrous preform.

As used herein, the term "fiber density" is used with its common technical meaning with units of g/cm³ or g/cc. The fiber density may refer specifically to that of the individual fibers in the fibrous preform. The density will be measured, unless otherwise noted, by taking the weight divided by the geometric volume of each fiber. The density may refer to an average density of a plurality of fibers included in a fibrous preform.

As used herein, "CVI/CVD" may refer to chemical vapor infiltration and/or chemical vapor deposition. Accordingly, CVI/CVD may refer to chemical vapor infiltration or deposition or both.

As used herein, where values and ranges are defined, for temperature and time, the term "about" means +/- 100°C and +/- 24 hours.

In general, there are several methods of manufacturing carbon/carbon ("C/C") materials depending on the part geometries and the end application performance requirements. In some of these methods, the process involves starting with a dry fibrous preform comprised of oxidized polyacrylonitrile (PAN) fiber, or OPF, followed by carbonization to convert the OPF into carbon fibers to produce a carbon fiber preform. This is subsequently followed by densification, wherein the spaces between the fibers in the preform are filled via resin infiltration and pyrolysis and/or chemical vapor infiltration to produce a carbon-fiber reinforced carbon matrix composite, or C/C composite material.

In the foregoing, the OPF used in the fibrous preforms is derived from polyacrylonitrile (PAN) fiber. The PAN fiber is heated in a furnace with a controlled temperature and controlled oxidizing environment by a process called thermal stabilization or oxidation. During this process, the polyacrylonitrile linear polymer chains in the PAN fiber undergo conversion to form thermally stable polymer with a ladder structure. During the stabilization process, the polyacrylonitrile polymer molecules undergo a series of complex changes in chemistry, including cyclization of the nitrile groups, cross linking of the chain molecules, dehydrogenation and oxidation. As a result of these changes, volatile byproducts are formed that include water, CO and HCN. Most importantly, the changes to the polymer structure stabilize the fibers and prevent melting during the subsequent heat-treatment or carbonization process. The stabilized fiber is referred to as oxidized polyacrylonitrile fiber, or OPF. The resulting OPF typically comprises of about 45 - 70% carbon, with the balance comprising a mixture of hydrogen, nitrogen and oxygen.

During the stabilization or oxidation process, the temperatures, the temperature ramp rates, the tension force or amount of stretch on the fiber, the oxygen gas flow rates, and the total amount of time are all carefully controlled, as these have a direct impact on the quality and nature of the resulting OPF, including the resulting polymer structure, the degree of cyclization and oxidation, the overall composition of the fiber, and the radial variation of composition within the fiber, among others. There are several studies on the effect of the thermal stabilization parameters on the structure and properties of the OPF and its subsequent effect on the properties of the carbon fiber when it is converted to carbon fiber - for example, see Nunna, et al., Materials (2019) or Lee, et al., Advances in Chemical Engineering and Science (2012), or Fitzer, et al., Carbon (1986).

While thermal treatment in an oxidizing environment is one of the most common methods for forming oxidized PAN fiber, it should be understood that the present disclosure may be applied to OPF fibers obtained using other methods, such as electron beam, X-ray, gamma ray, ultraviolet, infrared, plasma treatments, or the like including combination of one or more of these treatment methods. As used herein, the term "OPF" refers to oxidized polyacrylonitrile (PAN) fiber, and may be used interchangeably with stabilized polyacrylonitrile (PAN) fiber, and may be derived from PAN fiber by any of the treatment methods or combinations thereof.

The OPF preform is then heat-treated in a furnace with a carefully controlled inert atmosphere and a controlled temperature ramp rate to convert the OPF to carbon fiber. As is well-understood, the heat of the furnace causes a chemical conversion which drives off the non-carbon chemical species from the preform leaving behind carbon. The atmosphere and temperature ramp rate during the heat-treatment process are designed to retain the fibrous structure, and achieve desired levels of fiber strength and modulus, among others. The carbon fiber formed after this heat-treatment process typically comprises 85-100% carbon. Since the heat-treatment results in the conversion of OPF to carbon fiber, the process is referred to as carbonization. As used herein, with reference to OPF, the term heat-treatment or carbonization refer to the process of converting the OPF to carbon fiber, and may be used interchangeably and has the same meaning.

After the preform has been heat-treated or carbonized, the preform is densified to produce carbon-carbon composite. In general, densification involves filling the voids, or pores, of the fibrous preform with additional carbon material. This may be done using the same furnace used for carbonization or a different furnace. Chemical vapor infiltration and deposition ("CVI/CVD") techniques are one of the methods used to densify the porous fibrous preform with a carbon matrix. CVI/CVD techniques commonly involve heating the carbonized preforms in the furnace, and flowing hydrocarbon gases into the furnace allowing these gases to flow around and through the fibrous preforms. The carbonized preforms may be fixtured in a CVI tooling fixture, wherein the fixture comprises of graphite or a composite and is configured with holes to allow gases to flow through the fixture and fibrous preform. The CVI fixture is designed to help the fibrous preform maintain its shape during the CVI preform, and also to control the rate and uniformity of infiltration through the preform. During the CVI process, carbon from the hydrocarbon gases is deposited on and within the fibrous preforms as a result of a reaction during the chemical vapor infiltration process. When the densification step is completed, the resulting C/C part has a carbon fiber structure with a carbon matrix filling the voids between the fibrous filaments in the fiber structure, thereby deriving the name "carbon/carbon."

During the heat-treatment process, and more particularly, as the oxidized PAN fibers are converted into carbon fibers, several interrelated changes and processes occur. The non-carbon elements in the OPF, including oxygen, nitrogen and hydrogen dissociate from the OPF and emerge from the fiber as volatile byproducts mostly in the form of water, ammonia, HCN, CO and nitrogen. The dissociation and formation of some of these byproducts is accompanied by reaction heat, or an exotherm. As the OPF is converting to carbon and producing volatile byproducts, there is also an associated shrinkage of the fibers and the overall fibrous preform, as well as a reduction in the overall weight of the fibrous preform. While the exact nature and extent of all these changes and processes can vary depending on the chemistry and degree of stabilization of the OPF, it is typical for the OPF to exhibit linear shrinkage of 5-20% and weight reduction of 30-60% as the OPF converts to carbon fiber. Stated differently, as the temperature is increased during heat-treatment, exothermic reactions occur in the OPF fibers as they are converted into carbon fibers. This conversion is further linked to shrinkage of the OPF fibers as they are converted into carbon and evolution of volatile byproducts that need to be driven away from the preform.

In the foregoing, since the exothermic reactions are triggered by temperature of the preform, uneven temperatures can result in uneven occurrence of the exotherms within the preform. Stated differently, as the temperature of the furnace is increased, the preform temperature may not increase evenly throughout the preform. As a result, an exotherm can occur in only certain regions within the preform. Since the exotherm releases heat, these preform regions may become hotter locally exacerbating the unevenness in temperatures within the preform. Since there are associated shrinkage of the fibers as a result of these reactions, the uneven exothermic reactions throughout the OPF preform tends to lead to uneven shrinking. Therefore, certain regions of the preform may be shrinking as a result of the conversion, while other regions remain unreacted and stay intact. The uneven shrinking imposes differential thermal and mechanical stresses on the fibrous preform and may result in undesirable wrinkling of the fibers and distortion in one or more regions of the preform. These undesirable wrinkling and distortions often do not get corrected or reversed after all the oxidized PAN fibers eventually convert to carbon fiber during the carbonization process. Moreover, it becomes difficult, if not impossible, to control the distortions imposed by the uneven occurrence of exotherms and associated stresses on the preform. In this regard, it is desirable to monitor and control the temperatures in the OPF preform during the carbonization process so as to control exothermic reactions and the associated temperature spikes evenly throughout the OPF preform (i.e., in all three dimensions of the preform) so as to cause the entire OPF preform to simultaneously (or nearly simultaneously) shrink, thereby preventing unwanted wrinkling and distortions. This is especially desirable during the carbonization of fibrous preform shapes featuring complex geometries and contours in order to maintain the desired shapes within desired tolerance limits.

A heat treatment tooling fixture arrangement of the present disclosure is configured to control the temperature and the temperature increases associated with reaction exotherms in a fibrous preform comprising OPF in a tooling assembly during carbonization. A heat treatment tooling fixture arrangement of the present disclosure utilizes temperature control channels formed into the tooling to influence a more uniform temperature and the associated exothermic reactions and shrinkage. The temperature control channels can be formed onto/into any of the tooling surfaces to target uniform heating/cooling across the assembly or to specific areas. A heat treatment tooling fixture arrangement of the present disclosure tends to address fiber wrinkling/shrinkage observed in present carbonization tooling without temperature control channels. The utilization of temperature control channels tends to provide an easy-to-implement method to provide heating/cooling to the assembly.

To convert an OPF preform to a carbonized preform, the preform is heated. In this temperature cycle, one or more exothermic reactions occur, including primary exotherms at a first temperature and secondary exotherms at a second temperature as the OPF converts to carbon. The remainder of the temperature cycle allows the carbon atoms to rearrange and align to achieve desirable strengths and modulus. Uneven occurrence of exothermic reactions within the preform may cause non-uniform wrinkling/shrinkage in the OPF preform that is undesirable. Systems and methods of the present disclosure control the temperature of the fiber during the carbonization process, as exothermic reactions occur to improve the uniformity of the preform and minimize wrinkling of the fibers.

Systems and methods of the present disclosure seek to control the preform temperature by flowing a temperature-controlled fluid. The present disclosure further aims to control temperature of the fluid, globally and locally, by regulating fluid flow and temperature using a tool with zoned fluid flow channels, which in turn enables control of the global and local temperatures and regulate the occurrence of exothermic reactions and associated temperature changes and shrinkage in the preform. The temperature within the zones can be further controlled by using sensor feedback (temperature and flow rates) in the in and out going fluid flow to regulate the temperature of the preform. The utilization of in-tool fluid flow can allow the carbonization process of the present disclosure to occur outside of a large carbonization furnace, enabling a more efficient process. For example, instead of heating and cooling a large furnace volume, channel specific temperature control tends to be much faster in performing carbonization.

In various embodiments, the present disclosure provides a composite (e.g., graphite or carbon/carbon) fixture arrangement suitable for withstanding carbonization temperatures to allow for performing a carbonization process using the hot fluid flow as the primary heat source (i.e., without a large carbonization furnace). In various embodiments, the present disclosure provides a metallic fixture arrangement suitable for withstanding low carbonization temperatures for performing the initial carbonization process before transferring the partially carbonized preform to a composite fixture arrangement. Control of temperature and reaction exotherm may be regulated via tool heating or via direct fluid impingement on the preform fibers. The second heat-treatment or carbonization can then be performed with or without active temperature control. By using a metallic fixture arrangement for the initial carbonization process, gripper plates for maintaining tension to the preform can be utilized as part of the metallic fixture.

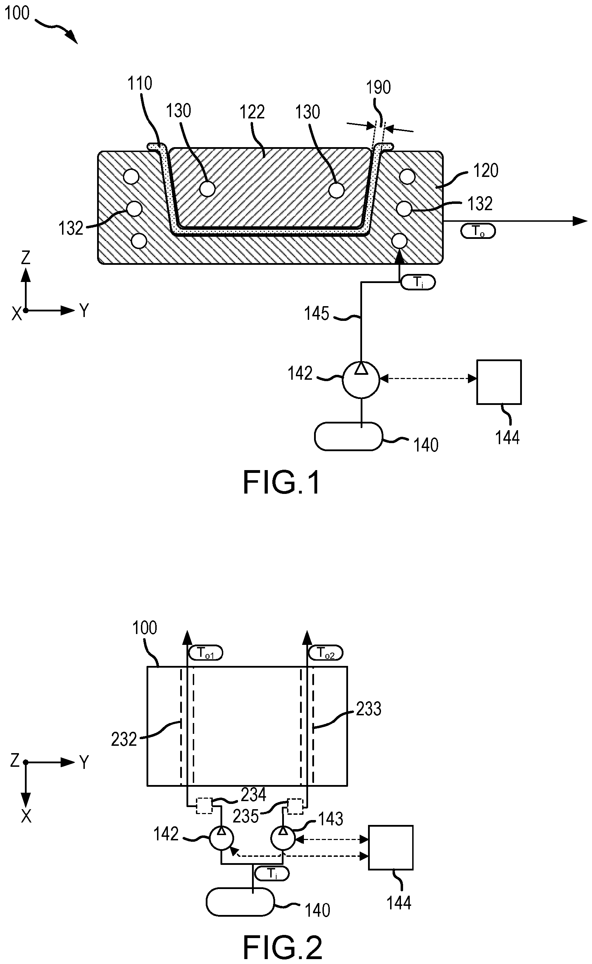

FIG. 1, in accordance with various embodiments, is a schematic illustration of an exemplary heat treatment tooling fixture arrangement 100 of the present disclosure. Heat treatment tooling fixture arrangement 100 includes at least two portions (e.g., a punch or male die 122 and a female die 120) that can be separated into an open position or placed together in a closed configuration. The male die 122 and the female die 120 are paired in such a way that they delimit between them, on their molding surfaces and during the closing of the tooling, a gap 190 corresponding to the final thickness of the part produced. Thus, the space between the male die 122 and the female die 120 defines a cavity wherein the fibrous preform 110 can be located.

In various embodiments, male die 122 and female die 120 are made from a carbon/carbon material or a graphite material suitable for withstanding carbonization temperatures. In various embodiments, male die 122 and female die 120 are made from a metal or metal alloy material suitable for withstanding carbonization temperatures. In various embodiments, fibrous preform 110 comprises one or more layers or sheets of an OPF material.

After being shape-formed into a desired shape, the fibrous preform 110 may undergo a carbonization process. The carbonization process may be employed to convert the fibers of the fibrous preform 110 into carbon fibers, as used herein "carbon fibers" means carbon fibers comprised of at least 90% carbon. The carbonization process is distinguished from the densification process described below in that the densification process involves infiltrating the pores of the fibrous preform 110 and depositing a carbon matrix within and around the carbon fibers of the fibrous preform 110, and the carbonization process refers to the process of converting the fibers of the fibrous preform 110 into carbon fibers.

The shape-formed fibrous preform 110 may be carbonized by flowing a heated fluid through male die 122 and/or female die 120 to heat the fibrous preform 110. The shape-formed fibrous preform 110 may be carbonized with the shape-formed fibrous preform 110 held in compression in the heat treatment tooling fixture arrangement 100 (i.e., the fibrous preform 110 remains in the fixture during carbonization). In general, the carbonization process involves heating the shape-formed fibrous preform 110 with the fluid flow to a carbonization temperature. In various embodiments, the carbonization temperature may be varied based on the desired strength and modulus of the carbon fiber and the application. In various embodiments, an inert atmosphere of nitrogen, argon or a vacuum is provided around the heat treatment tooling fixture arrangement 100 during the carbonization process. The heat of the fluid flow causes a chemical conversion of the OPF that converts the fibers to carbon fibers and drives off volatile byproducts. Although it is sometimes preferred that the fibers in the carbonized fiber preform be 100% carbon fiber, it is generally acceptable for a less than full conversion to take place. The resulting carbonized fiber preform generally has the same fibrous structure as the fibrous preform before carbonizing. During carbonization, the total mass and the total fiber volume in each fibrous preform is typically reduced due to the loss of volatile byproducts, including but not limited to water, ammonia, carbon oxides, HCN and nitrogen.

Fiber density of the fibrous preform 110 may increase during carbonization (e.g., from about 1.37 g/cc in OPF state to about 1.77-1.85 g/cc after carbonization, depending on the final carbonization temperature). In various embodiments, the OPF fibers shrink during carbonization, with linear shrinkage in the fibers ranging from 5-20% and weight reduction of 30-60%, or a char/carbon yield of 40-70% by weight. As used herein "char/carbon yield" means the remaining mass of the OPF as it is converted to carbon fiber during the carbonization process.

In various embodiments, during the carbonization process, an exotherm may occur in the OPF fibers at a first temperature. In this regard, it may be desirable to control a temperature of the fibrous preform 110 such that the fibrous preform 110 is evenly heated and the entire fibrous preform 110 reaches the temperature range at the same time or substantially the same time to prevent unwanted wrinkling. When the exothermic reactions occur, it may be desirable to regulate the temperature of the preform and maintain even temperatures in the preforms, and to control the rate of temperature change throughout the preform to prevent unwanted wrinkling and distortion.

In various embodiments, one or more temperature control channels are provided in the heat treatment tooling fixture arrangement 100. For example, temperature control channels 130 may be disposed in male die 122 and/or temperature control channels 132 may be disposed in female die 120. In various embodiments, temperature control channels 130 are apertures extending longitudinally (i.e., along the X-axis) through male die 122. In various embodiments, temperature control channels 132 are apertures extending longitudinally (i.e., along the X-axis) through female die 120.

The heat treatment tooling fixture arrangement 100 may further include a fluid source 140 for containing a fluid, for example a compressed inert gas or less reactive gas, such as argon or nitrogen, among others. The fluid can be a compressible fluid or an incompressible fluid. The fluid can be an inert gas or a byproduct from the conversion of the oxidized polyacrylonitrile fiber to carbon (e.g., a gas such as hydrogen, nitrogen, HCN, water vapor, ammonia or carbon oxide). A manifold 145 (e.g., a conduit or the like) defining one or more flow paths and one or more associated valves 142 may be provided for controlling a flow rate of the fluid through the heat treatment tooling fixture arrangement 100. For example, a single valve 142 may control the flow rate of the fluid through all the temperature control channels 130, 132, or in various embodiments a plurality of valves 142 may be provided for controlling a flow rate of the fluid through different temperature control channels 130 or temperature control channels 132 (e.g., one valve per channel, or one valve per group of channels). In various embodiments, manifold 145 directs the fluid into one or more temperature control channels 130, 132. The manifold 145 may be formed using one or more pieces and/or connections. A connection may be formed between the manifold 145 and the heat treatment tooling fixture (i.e., male die 122 and/or female die 120) to ensure proper fluid flow through the temperature control channel (e.g., temperature control channel(s) 132 and/or temperature control channel(s) 130). The manifold 145 may be sealed to the heat treatment tooling fixture (i.e., male die 122 and/or female die 120) to prevent the fluid flow from leaking therefrom. In various embodiments, manifold 145 is made from a C/C, a graphite material, or a metal alloy material suitable for withstanding the carbonization temperatures described herein. In various embodiments, manifold 145 branches into a plurality of manifolds (e.g., pipes, conduits, or the like) or fluid flow paths to direct discrete flows of fluid into different temperature control channels (e.g., one or more temperature control channel(s) 132 and/or one or more temperature control channel(s) 130).

The heat treatment tooling fixture arrangement 100 may further include a control unit 144, which includes one or more controllers (e.g., processors) and one or more tangible, non-transitory memories capable of implementing digital or programmatic logic. In various embodiments, for example, the one or more controllers are one or more of a general purpose processor, digital signal processor (DSP), application specific integrated circuit (ASIC), field programmable gate array (FPGA), or other programmable logic device, discrete gate, transistor logic, or discrete hardware components, or any various combinations thereof or the like. In various embodiments, the control unit 144 controls valve 142. For example, the control unit 144 may control a position of valve 142 to regulate the flow rate of the fluid through heat treatment tooling fixture arrangement 100.

In various embodiments, control unit 144 utilizes temperature feedback of the fluid to determine a flow rate of the fluid through the temperature control channels 130 and/or temperature control channels 132. In various embodiments, control unit 144 receives a first temperature sensor feedback signal corresponding to an inlet temperature Tᵢ of the fluid entering heat treatment tooling fixture arrangement 100 and a second temperature sensor feedback signal corresponding to an outlet temperature Tₒ of the fluid exiting heat treatment tooling fixture arrangement 100. Control unit 144 may determine a difference between the outlet temperature Tₒ and the inlet temperature Tᵢ to determine a desired flow rate of the fluid. Control unit 144 may have one or more temperatures at which exotherms occur saved in memory and may be configured to monitor temperature sensor feedback to control the temperature and/or flow rate of the temperature control fluid to evenly bring all or substantially all portions of the fibrous preform 110 to a uniform temperature, thereby minimizing wrinkling of fibrous preform 110.

With reference to FIG. 2, heat treatment tooling fixture arrangement 100 is schematically illustrated having first and second valves 142 and 143 for controlling a flow rate of the fluid through first and second temperature control channels 232 and 233, respectively. Temperature control channel 232 may be disposed in or on male die 122 or female die 120. Temperature control channel 233 may be disposed in or on male die 122 or female die 120. Control unit 144 may determine a first difference between the outlet temperature Tₒ₁ of the first temperature control channel 232 and the inlet temperature Tᵢ and a second difference between the outlet temperature Tₒ₂ of the second temperature control channel 233 and the inlet temperature Tᵢ. Control unit 144 may compare the first difference and the second difference and control a position of valve 142 and/or valve 143 based on this comparison. For example, the first difference being greater than the second difference may be an indication that the temperature of fibrous preform 110 near temperature control channel 232 is greater than the temperature of fibrous preform 110 near temperature control channel 233. In this regard, it may be desirable to increase a flow rate of the fluid through temperature control channel 232 (e.g., by opening valve 142) to decrease a temperature (or decrease a rate of change of temperature) of the fibrous preform 110 near temperature control channel 232 until the temperature of fibrous preform 110 near temperature control channel 232 is the same, or nearly the same, as the temperature of fibrous preform 110 near temperature control channel 233 (e.g., by continuing to monitor the first and second differences until they are equal or nearly equal within a predetermined threshold). In this manner, control unit 144 may ensure that fibrous preform 110 uniformly reaches the temperature range to facilitate uniform occurrence of exotherm and minimize drastic increases in temperatures to eliminate or reduce undesirable wrinkling of the fibrous preform 110. In various embodiments, fibrous preform 110 is uniformly heated throughout the entire temperature range and continues to be heated for additional carbonization.

In various embodiments, a first heater 234 may be provided for controlling a temperature of the fluid through channel 232. In various embodiments, control unit 144 may vary a temperature of fluid through channel 232 based on the temperature feedback signals. For example, continuing with the above example, control unit 144 may decrease a temperature of the fluid through temperature control channel 232 (e.g., by sending a temperature command signal to heater 234 to decrease in temperate) to decrease a temperature (or decrease a rate of change of temperature) of the fibrous preform 110 near temperature control channel 232 until the temperature of fibrous preform 110 near temperature control channel 232 is the same, or nearly the same, as the temperature of fibrous preform 110 near temperature control channel 233 (e.g., by continuing to monitor the first and second differences until they are equal or nearly equal within a predetermined threshold). Similarly, a second heater 235 may be provided for controlling a temperature of the fluid through temperature control channel 233. In various embodiments, and still continuing with the above example, control unit 144 may increase a temperature of the fluid through temperature control channel 233 (e.g., by sending a temperature command signal to heater 235 to increase in temperate) to increase a temperature (or increase a rate of change of temperature) of the fibrous preform 110 near temperature control channel 233 until the temperature of fibrous preform 110 near temperature control channel 232 is the same, or nearly the same, as the temperature of fibrous preform 110 near temperature control channel 233 (e.g., by continuing to monitor the first and second differences until they are equal or nearly equal within a predetermined threshold). Alternatively, or in combination with heaters, temperature of the in-going fluid may be regulated by mixing fluids stored in containers, wherein the first container is at a first temperature and the second container is at a second temperature, and wherein the second temperature is greater than the first, and the temperature of the in-going fluid may be controlled by varying the relative volume ratio of fluids from the first and second container.

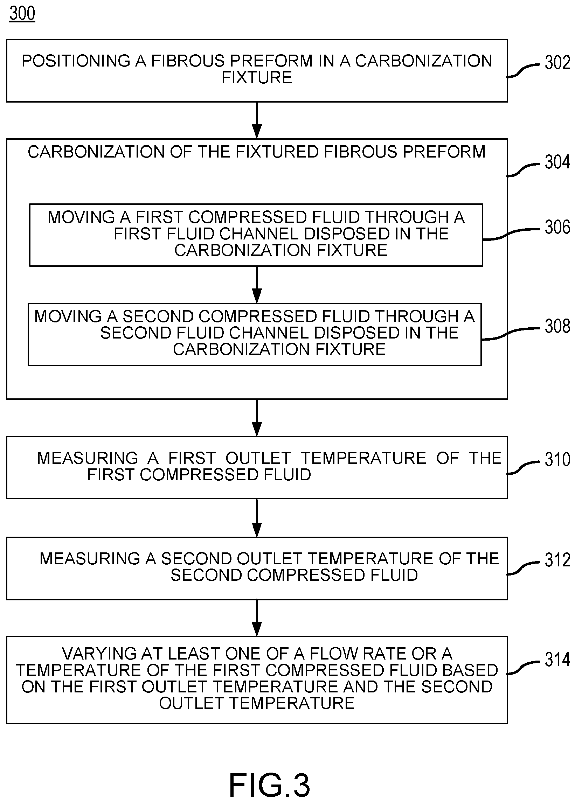

FIG. 3 is a flow chart for a method 300 for controlling exotherms during a carbonization process of a fibrous preform, in accordance with various embodiments. For ease of description, the method 300 is described below with reference to FIG. 1 and FIG. 2. The method 300 of the present disclosure, however, is not limited to use of the heat treatment tooling fixture arrangement 100 of FIG. 1 and FIG. 2.

In step 302, the fibrous preform 110 is positioned between male die 122 and female die 120 in a compressed position.

In step 304, a carbonization process is performed on the fixtured fibrous preform 110. The heat source for carbonization is step 304 is derived from the fluid flow through temperature control channel 232 and temperature control channel 233. For example, fibrous preform 110 may be heated to a carbonization temperature using the fluid flow through temperature control channel 232 and temperature control channel 233. In this regard, step 304 can include sub-step 306 which includes opening valve 142 to move fluid through temperature control channel 232. Valve 142 may be opened using control unit 144. Control unit 144 may vary a flow rate of the fluid by sending a valve position command signal to valve 142. Step 304 can further include sub-step 308 which includes opening valve 143 to move fluid through temperature control channel 233. Valve 143 may be opened using control unit 144. Control unit 144 may vary a flow rate of the fluid by sending a valve position command signal to valve 143. The flow of fluid can be heated such that heat from the fluid flow causes the fibrous preform 110 to be heated to a carbonization temperature.

In various embodiments, control unit 144 monitors the temperature of fibrous preform 110 (e.g., directly or indirectly by monitoring the inlet and outlet temperatures of the fluid flow) to ensure even heating and to ensure the fibrous preform 110 evenly arrives at the exotherm temperature.

In this regard, in step 310, control unit 144 may receive first outlet temperature Tₒ₁ of the first temperature control channel 232, for example from a temperature sensor (e.g., a thermocouple). Control unit 144 may further receive inlet temperature Tᵢ, for example from a temperature sensor. Step 310 may further include determining first difference between the outlet temperature Tₒ₁ of the fluid exiting the first temperature control channel 232 and the inlet temperature Tᵢ, in accordance with various embodiments.

In step 312, control unit 144 may receive second outlet temperature Tₒ₂ of the second temperature control channel 233, for example from a temperature sensor. Step 312 may further include determining a second difference between the outlet temperature Tₒ₂ of the fluid exiting the second temperature control channel 233 and the inlet temperature Tᵢ, in accordance with various embodiments. In various embodiments, control unit 144 compares the first difference with the second difference for controlling valve 142, valve 143, heater 234, and/or heater 235. In various embodiments, control unit 144 determines a difference between the outlet temperature Tₒ₂ and the outlet temperature Tₒ₁, wherein the inlet temperature Tᵢ for both temperature control channels 232 and 233 is assumed to be the same, for controlling valve 142, valve 143, heater 234, and/or heater 235; though in various embodiments separate inlet temperatures can be measured.

In step 314, the flow rate of the first fluid through temperature control channel 232 is varied (e.g., by varying a position or state of valve 142) and/or a temperature of the first fluid through temperature control channel 232 is varied (e.g., by adjusting heater 234) based on the first outlet temperature Tₒ₁ and the second outlet temperature Tₒ₂. In various embodiments, step 314 is performed based on the difference between first outlet temperature Tₒ₁ and the second outlet temperature Tₒ₂. In various embodiments, step 314 is performed based on a time or duration during the carbonization cycle.

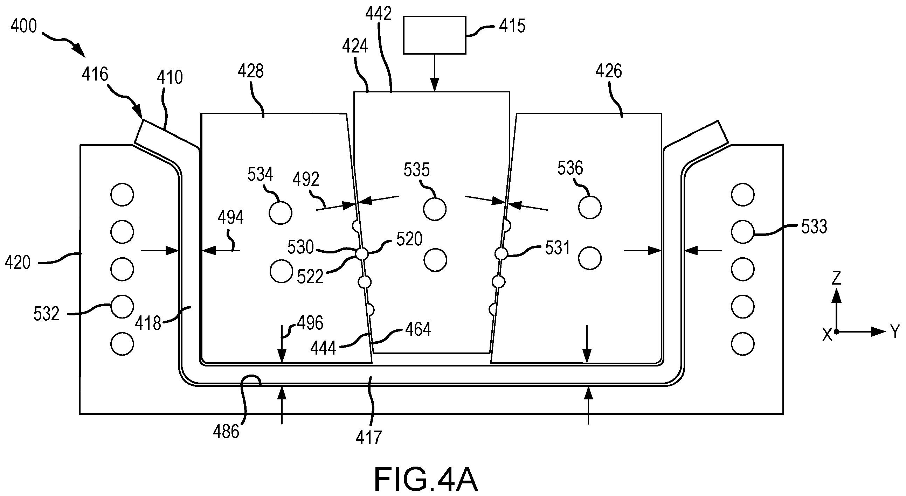

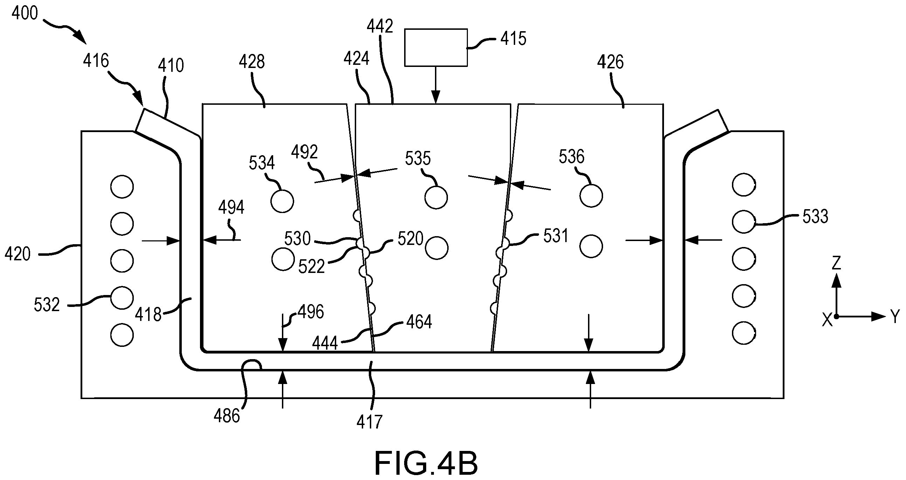

With reference to FIG. 4A and FIG. 4B, a heat treatment tooling fixture arrangement 400 for carbonization compression and shaping a fibrous preform 410 is illustrated, in accordance with various embodiments. Heat treatment tooling fixture arrangement 400 may be configured as a matched die forming tool and/or fixture. In various embodiments, heat treatment tooling fixture arrangement 400 is configured for forming a shaped fibrous preform 410 from a multi-layered preform; e.g., a stack of a plurality of layers of material. Heat treatment tooling fixture arrangement 400 may include a multi-component wedge-based press fixture comprising a female forming tool 420 and a multi-piece wedge and plug arrangement comprising a wedge 424, a first plug 426, and a second plug 428. The wedge 424, first plug 426, and second plug 428 are moveable with respect to the female forming tool 420 to compress the fibrous preform 410 therebetween, thereby shaping (or maintaining a shape of) and compressing the fibrous preform 410. This wedge-and-plug tooling design allows the heat treatment tooling fixture arrangement 400 to have enough flexibility to maintain pressure application on the side walls of the fibrous preform 410 as the thickness of the material decreases during the pre-carbonization compression process. In various embodiments, the design may utilize angled flanges to keep the wedges and plugs aligned together as the tooling pushes down on the fibrous preform 410 and into the female forming tool 420. In various embodiments, female forming tool 420, wedge 424, first plug 426, and second plug 428 are made from a non-metallic material (e.g., a graphite or C/C composite).

In various embodiments, heat treatment tooling fixture arrangement 400 includes one or more temperature control channels (e.g., temperature control channels 530 disposed on second plug 428 and wedge 424, temperature control channels 531 disposed on first plug 426 and wedge 424, temperature control channels 532 disposed in female forming tool 420, temperature control channels disposed in female forming tool 420, temperature control channels 534 disposed in second plug 428, temperature control channels 535 disposed in wedge 424, and/or temperature control channels 535 disposed in first plug 426). In various embodiments, temperature control channels 530, 531, 532, and 533 are similar to temperature control channels 130, 132 and temperature control channels 232, 233 described with respect to FIG. 1 and FIG. 2, respectively.

In various embodiments, first plug 426 can be arranged with no temperature control channels, only temperature control channels 536, only temperature control channels 531, or both temperature control channels 536 and 531. In various embodiments, second plug 428 can be arranged with no temperature control channels, only temperature control channels 534, only temperature control channels 530, or both temperature control channels 530 and 534. In various embodiments, wedge 424 can be arranged with no temperature control channels, only temperature control channels 535, only temperature control channels 530, only temperature control channels 531, or any combination thereof.

Fibrous preform 410 may comprise polyacrylonitrile (PAN) or OPF fibers extending in three directions and leaving a plurality of pores or open spaces and may be prepared for shape-forming, compression, and carbonization. In various embodiments, fibrous preform 410 is formed by stacking layers of PAN or OPF fibers and superimposing the layers (e.g., by stacking sheets of fabric). Fibrous preform 410 may undergo a through thickness reinforcement process (e.g., Z-needling, tufting, and/or stitching). Z-needling refers to a process comprising penetrating a composite material (e.g., fibrous preform 410) with needles and moving (e.g., by pulling or pushing) fibers from the in-plane direction and forcing them into the Z direction, where the "Z direction" as used herein refers to a direction perpendicular to the in-plane direction. For preforms having curved surfaces, the "Z-direction" refers to the direction normal to a (local) surface of the fibrous preform at the point where the preform is being needled (i.e., a direction normal to the tangent plane to the surface at the point of needling). In general, the through thickness reinforcement process has the effect of interlocking individual fabric layers together. Thus, after through thickness reinforcement, the fibrous material has fibers extending in three different directions (i.e., in the X and Y directions in the plane of the fibrous layers and the Z direction perpendicular to the fibrous layers). Through thickness reinforcement of the fibrous preform 410 may be done as one or more layers are added to the stack or may be done after the entire stack of layers is formed. The needles may also penetrate through only a portion of fibrous preform 410, or may penetrate through the entire fibrous preform 410. In addition, resins may be added, in various embodiments, to fibrous preform 410 by either injecting the resin into the preform following construction or coating the fibers or layers prior to forming the fibrous preform 410. The through thickness reinforcement process may take into account needling parameters optimized to maintain fiber orientation, minimize in-plane fiber damage, and maintain target interlaminar properties.

After through thickness reinforcement, the fibrous preform 410 may be both compressed to higher fiber volume ratio and formed to shape in a shape-forming process (e.g., using the composite fixture of the present disclosure, or another similarly shaped shape forming tool). It should be understood, moreover, that fibrous preforms 410 not subject to through thickness reinforcement prior to pre-carbonization compression are also within the scope of the present disclosure.

In various embodiments, wedge 424, first plug 426, and/or second plug 428 may be arranged in one or more arrays longitudinally disposed adjacent from each neighboring wedge 424, first plug 426, and/or second plug 428, respectively, in the same array. For example, the wedge 424 may comprise a first wedge sub-unit and a second wedge sub-unit. The first plug 426 may comprise a first plug sub-unit and a second plug sub-unit. The second plug 428 may comprise a third plug sub-unit and a fourth plug sub-unit. In various embodiments, the sub-units of an array (e.g., wedge sub-units, first plug sub-units, and/or second plug sub-units) may be interlocked with one another using tongue and groove joints, or the like, to maintain alignment of adjacent sub-units and even compression along the longitudinal length of the fibrous preform 410. In various embodiments, each sub-unit may comprise a different geometry to conform to the geometry of the female forming tool 420. Moreover, by providing a plurality of sub-units, each sub-unit may be separately installed, which may increase ease of installation for longitudinally lengthy arrays (as opposed to installing a single, more lengthy unit).

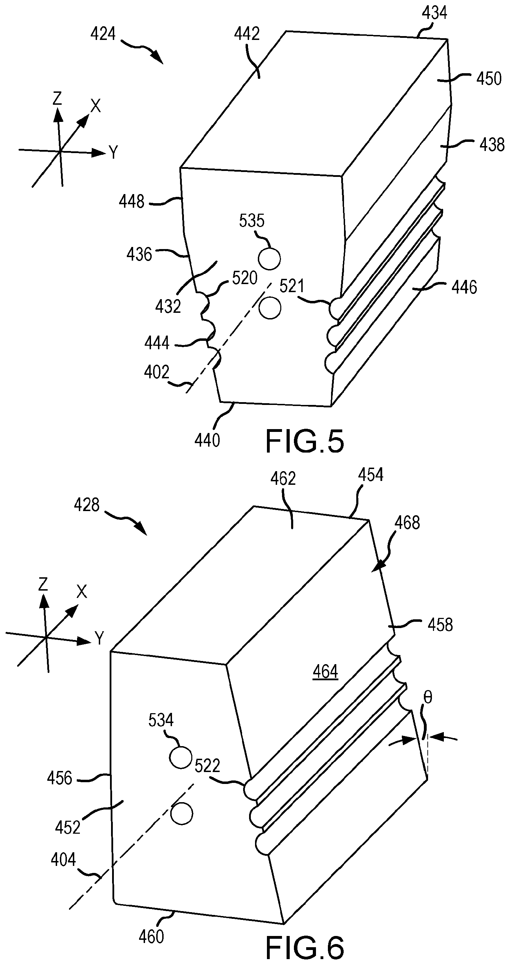

With reference to FIG. 5, the wedge 424 extends longitudinally along a longitudinal centerline 402 of the wedge 424 (e.g., along an X-axis) between and to a first end 432 of the wedge 424 and a second end 434 of the wedge 424. The wedge 424 extends laterally (e.g., along a Y-axis) between and to a first side 436 of the wedge 424 and a second side 438 of the wedge 424. The wedge 424 extends vertically (e.g., along a Z-axis) between and to a bottom side 440 of the wedge 424 and a top side 442 of the wedge 424.

The wedge 424 is configured with a wedge-shaped geometry; e.g., the first side 436 comprises a first angled surface 444 (also referred to herein as a first tapered surface) and the second side 438 comprises a second angled surface 446 (also referred to herein as a second tapered surface) such that the wedge 424 is tapered toward the bottom side 440. In various embodiments, the first side 436 further comprises a first vertical surface 448 and the second side 438 comprises a second vertical surface 450 such that the wedge 424. The first angled surface 444 may intersect with the first vertical surface 448 at a horizontally extending (e.g., along the X-axis) interface. The second angled surface 446 may intersect with the second vertical surface 450 at a horizontally extending (e.g., along the X-axis) interface.

In various embodiments, first angled surface 444 comprises one or more channels 520 extending longitudinally thereon. In various embodiments, channel 520 extends between and to first end 432 and second end 434. In various embodiments, second angled surface 446 comprises one or more channels 521 extending longitudinally thereon. In various embodiments, channel 521 extends between and to first end 432 and second end 434. In various embodiments, one or more temperature control channels 535 extend through wedge 424 from and between first end 432 and second end 434.

With reference to FIG. 6, the second plug 428 extends longitudinally along a longitudinal centerline 404 of the second plug 428 (e.g., along an X-axis) between and to a first end 452 of the wedge 424 and a second end 454 of the second plug 428. The second plug 428 extends laterally (e.g., along a Y-axis) between and to a first side 456 of the second plug 428 and a second side 458 of the second plug 428. The second plug 428 extends vertically (e.g., along a Z-axis) between and to a bottom side 460 of the second plug 428 and a top side 462 of the second plug 428.

In various embodiments, the first side 456 is shaped to conform to a geometry of a side surface of the female forming tool 420. In various embodiments, the first side 456 comprises a vertical surface. However, first side 456 may be at an angle with respect to a vertical direction depending on the desired shape of the final C/C part. The second side 458 may comprise an angled surface 464 configured to engage (e.g., directly contact) first angled surface 444 whereby preform compressing forces (represented by arrows 492 in FIG. 4A)-e.g., in response to wedge 424 moving (vertically) downward (e.g., in the negative Z-direction)-are transmitted therebetween for moving the second plug 428 in the lateral direction (e.g., along the Y-axis) to compress (e.g., see compression forces represented by arrows 494 in FIG. 4A) a sidewall 418 of the fibrous preform 410. The preform compressing force 492 transmitted between wedge 424 and second plug 428 may further move the second plug 428 in the vertical direction (e.g., in the negative Z-direction) to compress (e.g., see compression forces represented by arrows 496 in FIG. 4A) a bottom wall 417 of the fibrous preform 410. Angled surface 464 may be oriented at a non-parallel angle 0 with respect to the vertical direction (e.g., the Z-direction). Angled surface 464 may extend between and to the top side 462 and the bottom side 460 of second plug 428. The first plug 426 may be structurally similar to the second plug 428. The first plug 426 may exhibit a mirrored geometry with that of the second plug 428.

In various embodiments, angled surface 464 comprises one or more channels 522 extending longitudinally thereon. In various embodiments, channel 522 extends between and to first end 452 and second end 454. In various embodiments, channel 522 interfaces with channel 520 of wedge 424 to form one or more of temperature control channels 530 (see FIG. 4A). In this regard, channel 520 may define a first half of temperature control channel 530 and channel 522 may define a second half of temperature control channel 530. In various embodiments, one or more temperature control channels 534 extend through second plug 428 from and between first end 452 and second end 454.

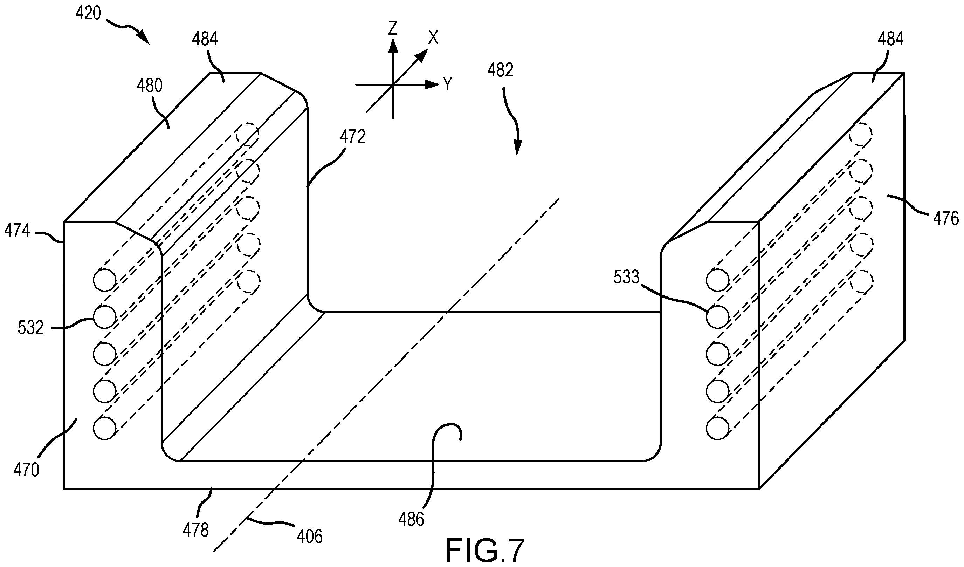

With reference to FIG. 7, the female forming tool 420 extends longitudinally along a longitudinal centerline 406 of the female forming tool 420 (e.g., along X-axis) between and to a first end 470 of the female forming tool 420 and a second end 472 of the female forming tool 420. The female forming tool 420 extends laterally (e.g., along a Y-axis) between and to a first side 474 of the female forming tool 420 and a second side 476 of the female forming tool 420. The female forming tool 420 extends vertically (e.g., along a Z-axis) between and to a bottom side 478 of the female forming tool 420 and a top side 480 of the female forming tool 420.

The female forming tool 420 is configured with at least one die recess 482; e.g., an aperture such as a pocket, a channel, a groove, etc. The die recess 482 of FIG. 7 extends (e.g., partially) vertically into the female forming tool 420 from one or more top surfaces 484 of the female forming tool 420 to a recess surface 486 of the female forming tool 420, where the top surfaces 484 of FIG. 7 are arranged on opposing sides of the recess surface 486 at the female forming tool top side 480. The die recess 482 of FIG. 7 extends longitudinally in (e.g., through) the female forming tool 420, for example, between and to the female forming tool first end 470 and/or the female forming tool second end 472. The die recess 482 of FIG. 7 extends laterally in (e.g., within) the female forming tool 420, for example, between opposing lateral sides of the recess surface 486.

The recess surface 486 is a concave or concave-convex surface and may have a curved geometry; e.g., a three-dimensional (3D) curvature. The recess surface 486 of FIG. 7, for example, has a curved (e.g., arcuate, splined, etc.) cross-sectional geometry in a lateral-vertical reference plane; e.g., a Y-Z plane. The recess surface 486 of FIG. 7 also has a curved (e.g., arcuate, splined, etc.) cross-sectional geometry in a longitudinal-vertical reference plane; e.g., a X-Z plane. This recess curvature may change as the recess surface 486 / the die recess 482 extends laterally and/or longitudinally, which may provide the recess surface 486 with a complex 3D curvature. In various embodiments, the recess curvature may remain uniform as the recess surface 486 / the die recess 482 extends laterally and/or longitudinally. The recess surface 486 may be configured without any sharp corners or sharp transitions.

In various embodiments, female forming tool 420 comprises one or more temperature control channels 532 disposed therein. Temperature control channels 532 may be disposed at or near first side 474. Temperature control channels 532 may extend between and to first end 470 and second end 472. In various embodiments, female forming tool 420 comprises one or more temperature control channels 533 disposed therein. Temperature control channels 533 may be disposed at or near second side 476. Temperature control channels 533 may extend between and to first end 470 and second end 472.

With reference again to FIG. 4A and FIG. 4B, during a shape forming and carbonization process, the fibrous preform 410 is provided and installed in heat treatment tooling fixture arrangement 400. Fibrous preform 410 may be configured as a multi-layered preform. The preform 410, for example, may include a stack of a plurality of layers of material. This stack includes the top layer of material at / forming a top side of the fibrous preform 410 and the bottom layer of material at / forming a bottom side of the fibrous preform 410. The stack may also include at least one (or more) intermediate layer of material vertically between the top layer of material and the bottom layer of material. Each layer of material may share a common (e.g., the same) construction and/or material makeup. Each layer of material in the stack, for example, may be formed by a sheet / layer of fibrous material; e.g., non-woven oxidized polyacrylonitrile (PAN) fibers. However, one or more layers of dissimilar construction may also be included (e.g., a non-woven with a chopped fiber mat sacrificial material).

In various embodiments, fibrous preform 410 is shape formed using the heat treatment tooling fixture arrangement 400. In various embodiments, fibrous preform 410 is shape formed prior to being moved to the heat treatment tooling fixture arrangement 400.

The fibrous preform 410 is installed into the heat treatment tooling fixture arrangement 400. The fibrous preform 410 may be pushed down (in the negative Z-direction) to the bottom of the recess surface 486 of the female forming tool 420 (see FIG. 4A) (e.g., by hand, using wedge 424, or the like). Wedge 424, first plug 426, and second plug 428 may move (e.g., downward) vertically from an (e.g., open) position to a (e.g., closed) position. In various embodiments, the first plug 426 and second plug 428 are moved downward to rest on the fibrous preform and the wedge 424 is then moved downward to fit between the first plug 426 and second plug 428. As the first plug 426 and second plug 428 move (e.g., simultaneously or each individually), the first plug 426 and second plug 428 vertically engage a portion of the fibrous preform 410 that overlaps (e.g., spans laterally and longitudinally across) the die recess 482. More particularly, the bottom side 460 vertically presses against the top layer of material. With the wedge 424, first plug 426, and second plug 428 installed over the fibrous preform and at least partially within the die recess 482 (e.g., see FIG. 4A), the wedge 424 may be further moved (e.g., downward) vertically with respect to the female forming tool 420. Wedge 424 may be moved vertically using an apparatus 415, such as a dead weight, a press (e.g., mechanical, pneumatic, hydraulic, heated platen, etc.), or the like. As the wedge 424 continues to vertically move to its (e.g., closed) position of FIG. 4B, the wedge transmits a preform compressing force 492 into the first plug 426 and the second plug 428. For example, with particular focus on the second plug, preform compressing force 492 is transmitted via first angled surface 444 of wedge 424 and angled surface 464 of second plug 428, thereby causing the second plug 428 to move in the lateral direction (e.g., along the Y-axis) to compress (e.g., see compression forces represented by arrows 494 in FIG. 4A) a sidewall 418 of the fibrous preform 410 and also causing the second plug 428 to move (e.g., downward) in the vertical direction (e.g., along the Z-axis) to compress (e.g., see compression forces represented by arrows 496 in FIG. 4A) a bottom wall 417 of the fibrous preform 410. Although described with respect to second plug 428, it should be understood that wedge 424 similarly engages first plug 426 (e.g., with similar forces mirrored about the Z-axis). As the wedge 424 continues to vertically move to its (e.g., closed) position of FIG. 4B, the first plug 426 and second plug 428 (and in various embodiments the wedge 424) collectively shape the preform 410 to conform to (e.g., take the shape of) the recess surface 486. The fibrous preform 410 is press formed (e.g., stamped) into a shaped body 416 between the wedge 424, first plug 426, second plug 428 and the recess surface 486 of female forming tool 420. Stated differently, pressing wedge 424 between and against the first plug and the second plug in a first direction (e.g., the negative Z-direction) causes the first plug 426 and the second plug to move in a second direction (e.g., along the Y-axis) substantially perpendicular to the first direction.

As the wedge 424 continues to vertically move to its (e.g., closed) position of FIG. 4B, the top side 442 may eventually become flush with the top sides of first plug 426 and second plug 428. When the top side 442 is flush with the top sides of first plug 426 and second plug 428, the apparatus 415 may contact to top sides of first plug 426 and second plug 428 (in addition to the top side 442 of wedge 424) and simultaneously move all three of wedge 424, first plug 426, and second plug 428. In this manner, the bottom sides of all three of wedge 424, first plug 426, and second plug 428 may be simultaneously pressed against the top layer of material of the fibrous preform 410, thereby shaping and compressing the fibrous preform into the shaped body 416. In this regard, total vertical dimensions (e.g., a height; i.e., along the Z-axis) of the wedge 424, the first plug 426, and the second plug 428 may be the same. In various embodiments, three discrete apparatus 415 may be provided to individually press each of wedge 424, first plug 426, and second plug 428, respectively.

Moreover, as the wedge 424 continues to vertically move to its (e.g., closed) position, the first plug 426 and the second plug 428 may be moved laterally outward (see FIG. 4B) to accommodate the increasing width of the wedge 424, thereby compressing and shaping the sidewalls 418 of the fibrous preform into the shaped body 416.

During the carbonization process, wedge 424 may be moved vertically with respect to first plug 426 and/or second plug 428 (e.g., as the fibrous preform is compressed and/or shrinks), for example using apparatus 415. As wedge 424 moves vertically with respect to first plug 426 and/or second plug 428, first angled surface 444 may translate with respect to angled surface 464. In this manner, channel 520 may translate with respect to channel 522. The volume and/or surface area of temperature control channel 530 can be varied in response to this translation of channel 520 with respect to channel 522 (i.e., in response to wedge 424 moving with respect to second plug 428). In a first position (e.g., see FIG. 4A) channel 520 and channel 522 may define a first temperature control channel 530 having a first geometry. However, as channel 520 moves with respect to channel 522, the geometry of temperature control channel 530 may be altered (e.g., see FIG. 4B). In this manner, channel 520 and channel 522 may be machined onto the interfacing surfaces of the wedge 424 and plug 428, respectively, such that cooling the surface area of temperature control channel 530 varies via the translation of the wedge 424 during the carbonization process (e.g., as the fibrous preform 410 shrinks during carbonization and/or as the wedge 424 is pressed downward with respect to second plug 428 with apparatus 415). In various embodiments, in response to the wedge 424 moving to a first position with respect to the plug 428 (e.g., see FIG. 4A), the channel 520 and the channel 522 define a first fluid flow path (i.e., temperature control channel 530 as illustrated in FIG. 4A) comprising a first surface area. In various embodiments, in response to the wedge 424 moving to a second position with respect to the plug 428 (e.g., see FIG. 4B), the channel 520 and the channel 522 define a second fluid flow path (i.e., temperature control channel 530 as illustrated in FIG. 4B) comprising a second surface area different from the first surface area. In various embodiments, the surface area of temperature control channel 530 decreases (thus, slowing tool heating when exposed to the hot ambient furnace air) via the translation of the wedge 424 through the carbonization process. In this manner, one or more temperature control channels 530 may be tailored to vary in surface area as desired to control the heating of wedge 424 and plug 428 via the translation of the middle wedge through the carbonization process. In this manner, the exotherms in fibrous preform 410 may be controlled via temperature control channels 530 (and/or temperature control channels 532, 533) to prevent unwanted wrinkling. In various embodiments, temperature control channels 532, 533 may receive a fluid in a manner as described with respect to FIG. 1 and FIG. 2. In various embodiments, temperature control channels 534, temperature control channels 535, and/or temperature control channels 536 may receive a fluid in a manner as described with respect to FIG. 1 and FIG. 2.

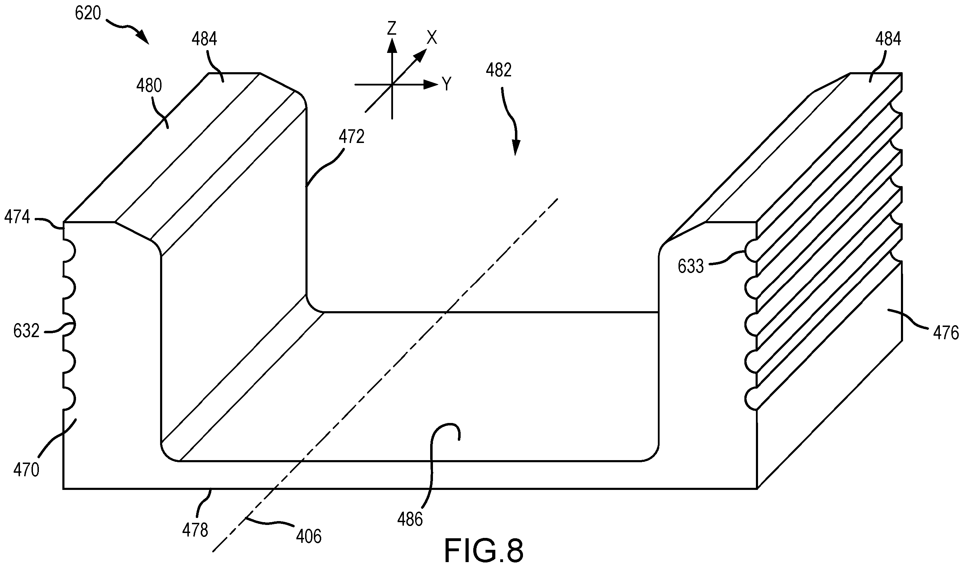

With reference to FIG. 8, a female forming tool 620 is illustrated, in accordance with various embodiments. Female forming tool 620 may be similar to female forming tool 420. With respect to FIG. 8, elements with like element numbering, as depicted in FIG. 7, are intended to be the same and will not necessarily be repeated for the sake of clarity. Female forming tool 620 comprises one or more temperature control channels 632 disposed in an outer surface thereof (e.g., at first side 474). Temperature control channels 632 may extend between and to first end 470 and second end 472. In various embodiments, female forming tool 620 comprises one or more temperature control channels 633 disposed in an outer surface thereof (e.g., at second side 476). Temperature control channels 633 may extend between and to first end 470 and second end 472.

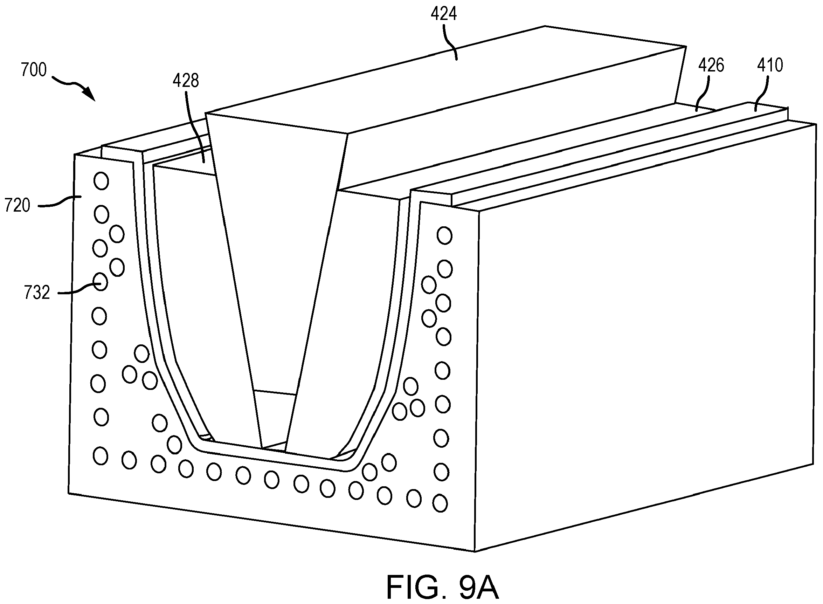

With reference to FIG. 9A, a heat treatment tooling fixture arrangement 700 for carbonization compression and shaping a fibrous preform 410 is illustrated, in accordance with various embodiments. With respect to FIG. 9A through FIG. 9C, elements with like element numbering, as depicted in FIG. 4A, are intended to be the same and will not necessarily be repeated for the sake of clarity. Female forming tool 720 comprises one or more temperature control channels 732 disposed therein. The temperature control channels 732 may be arranged similar to any of the temperature control channels described herein.

In various embodiments, temperature control channels 732 can be disposed (e.g., machined) in low-stress areas of the female forming tool 720. A geometry of the temperature control channels 732 may be dependent on the desired cooling.

In various embodiments, a density of the temperature control channels 732 may be dependent on the geometry of the temperature control channels 732. For example, in the illustrated geometry, there may be more temperature control desirable around the corners/radii of the part as compared to other regions. In this regard, a density of the temperature control channels 732 may vary as desired. Providing a variable density of temperature control channels tends to maintain a uniform exotherm across the preform 410 in accordance with various embodiments.

In various embodiments, creating a thermal gradient during carbonization, and controlling where shrinkage is occurring, tends to create additional, controllable tension/strain in the preform as different regions are shrinking.

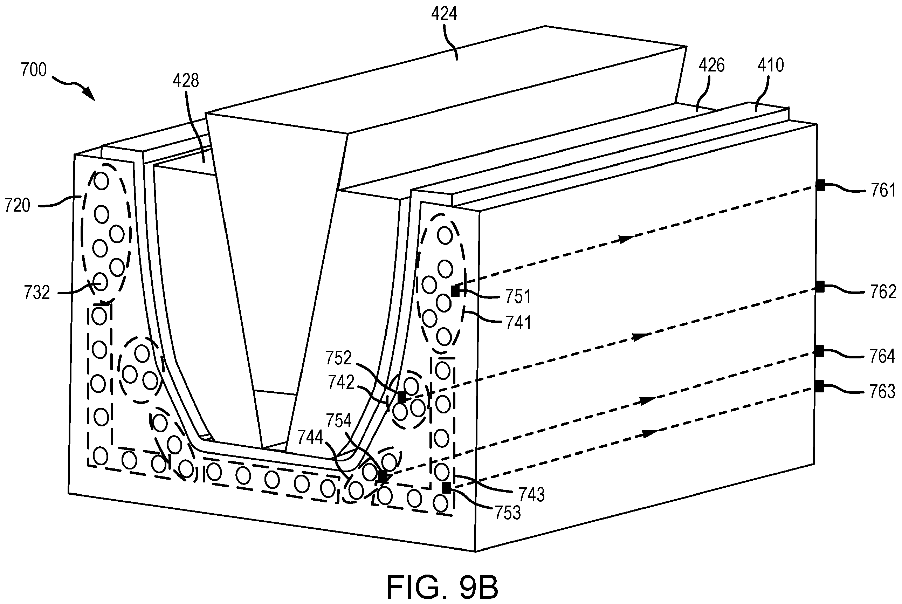

With reference to FIG. 9B, temperature control channels 732 can be logically separated into a plurality of groups, depending on the preform geometry. For example, a plurality of groups of temperature control channels 732 are circled with dashed lines in FIG. 9B (e.g., group 741, group 742, group 743, group 744, etc.). In various embodiments, group 742 and group 744 are located near corners or radii of preform 410. Each zone or group (correlated to geographic regions) can be individually controlled utilizing feedback from inlet and outlet temperature sensors. For example, group 741 can have an inlet temperature sensor 751 and an outlet temperature sensor 761, group 742 can have an inlet temperature sensor 752 and an outlet temperature sensor 762, group 743 can have an inlet temperature sensor 753 and an outlet temperature sensor 763, and group 744 can have an inlet temperature sensor 754 and an outlet temperature sensor 764. In FIG. 9B a dashed line is illustrated between each inlet and outlet sensor pair and represents the collective temperature control channels for the respective group.

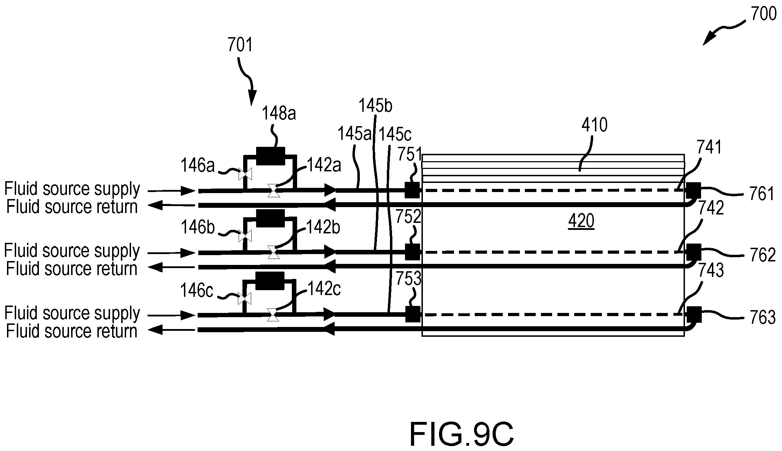

With reference to FIG. 9C, a side view of heat treatment tooling fixture arrangement 700 with the heat treatment tooling fixture connected to the fluid control system 701 is schematically illustrated, in accordance with various embodiments. Heat treatment tooling fixture arrangement 700 may be configured for carbonization with active exotherm control via the female forming tool 420. Though it should be understood that the disclosure described with respect to FIG. 9B and FIG. 9C can similarly be applied to the male dies. Heat treatment tooling fixture arrangement 900 includes a plurality of valves (e.g., valve 142a, valve 142b, valve 142c, etc.) for respectively controlling a flow of a temperature control fluid through each group of temperature control channels (e.g., group 741, group 742, group 743, etc.). Each group of temperature control channels can be coupled to a different conduit (e.g., conduit 145a, conduit 145b, conduit 145c, etc.) for independent temperature control of each group. The conduits can interface with the temperature control channels of the heat treatment tooling fixture (e.g., female die 120). The temperature control channels can be used to either provide active cooling (to control a uniform exotherm) or active heating (to maintain uniform heating of the tooling assembly in the furnace) to desired regions of the heat treatment tooling fixture arrangement 900. By having individual control points, heat treatment tooling fixture arrangement 900 can tailor when and where shrinkage (via heating and/or cooling) occurs and can mitigate wrinkling and misalignment across the preforms.

In various embodiments, the fluid flow is heated using heaters coupled to each conduit 145a, 145b, and 145c. For example, for conduit 145a, valve 142a can be opened and valve 146a can be closed to allow a flow of the fluid through conduit 145a. Valve 146a and heater 148a can be coupled in parallel with valve 142a. Valve 146a can be opened to heat the fluid flowing through conduit 145a as desired. In this regard, valve 146a can be opened to control a flow of fluid through heater 148a. Conduit 145b can similarly be arranged with valve 142b, valve 146b, and heater 148b. Conduit 145c can similarly be arranged with valve 142c, valve 146c, and heater 148c. In various embodiments, heater 148a is an in-line forced air heater or the like.

As the fibrous preform 410 is heated using the hot fluid flow, inlet temperature sensor 751 and outlet temperature sensor 761 of the conduit 145a can be monitored to determine a temperature change between the inlet side and the outlet side of conduit 145a. In this manner, it can be determined whether in increase or decrease in heating is desired in certain regions of the fibrous preform 410. In various embodiments, it may be desirable to have even heating throughout the fibrous preform 410. In various embodiments, it may be desirable to determine whether the exotherm has occurred. Inlet temperature sensor 752 and outlet temperature sensor 762 of the conduit 145b, and inlet temperature sensor 753 and outlet temperature sensor 763 of the conduit 145c, can be similarly monitored. In this regard, valve 142a and valve 146a can be controlled based on sensor feedback from inlet temperature sensor 751 and outlet temperature sensor 761. Valve 142b and valve 146b, and valve 142c and valve 146c, can similarly be controlled based on sensor feedback from inlet temperature sensor 752 and outlet temperature sensor 762, and inlet temperature sensor 753 and outlet temperature sensor 763, respectively.

After carbonization is complete, all the valves 142a, 142b, and 142c can be closed and the preform 410 can be removed from heat treatment tooling fixture arrangement 700 for further processing (e.g., densification). In various embodiments, various portions of the carbonization process of the present disclosure can be performed automatically (e.g., using control unit 144 of FIG. 1). In various embodiments, various portions of the method may be performed manually, wherein a valve flow rate and temperature sensor readouts are read by an operator.

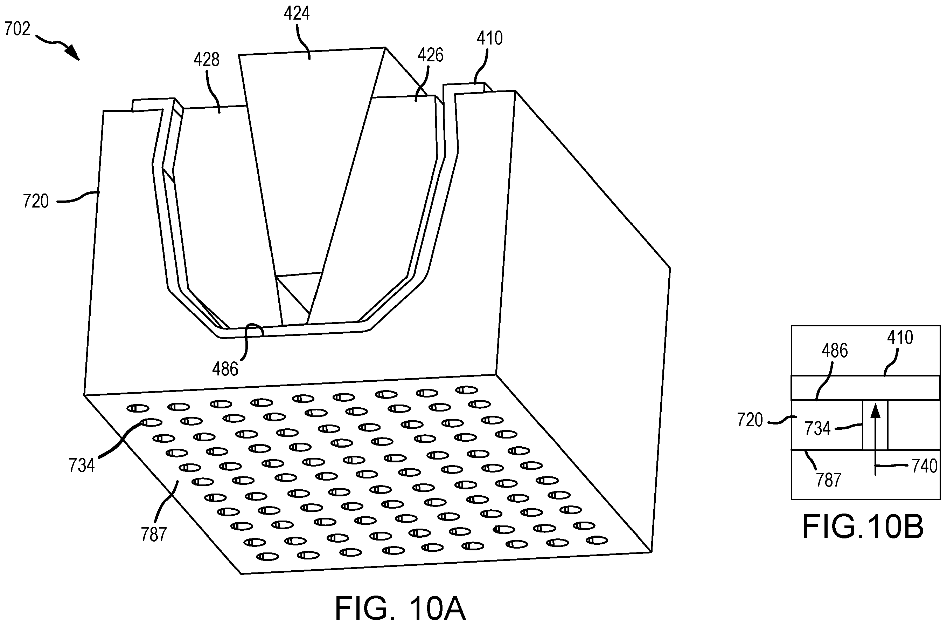

With reference to FIG. 10A, a heat treatment tooling fixture arrangement 702 is illustrated, in accordance with various embodiments. heat treatment tooling fixture arrangement 702 may be similar to heat treatment tooling fixture arrangement 700 as described with respect to FIG. 9A through FIG. 9C, except that temperature control for heat treatment tooling fixture arrangement 702 is performed using one or more temperature control channels 734 disposed at a bottom surface 787 of female forming tool 720. The temperature control channels 734 may be arranged similar to any of the temperature control channels described herein. With momentary reference to FIG. 10B, one or more of the temperature control channels 734 may extend through female forming tool 720 to recess surface 486. In this manner, one or more temperature control channels 734 may direct a temperature control fluid 740 directly onto the preform 410. Stated differently, one or more temperature control channels 734 may be in fluid communication with preform 410. In this manner, one or more temperature control channels 734 may direct the temperature control fluid 740 directly onto the preform 410 in various embodiments (to apply direct heating or cooling to the preform 410, rather than relying on temperature control via the female forming tool 720).

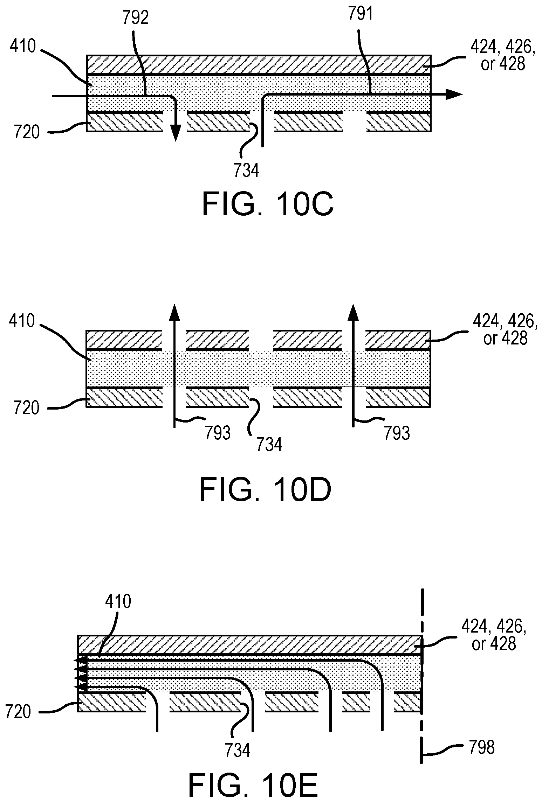

With reference to FIG. 10C, fluid flow using the direct impingement temperature control channels 734 can take various flow paths. For example, in various embodiments, the temperature control fluid 740 can flow into the preform 410 via perforated holes in the tool surface (i.e., through temperature control channels 734) and out through the preform 410, as illustrated by fluid flow path 791. In various embodiments, the temperature control fluid 740 can flow into the preform 410 directly through the preform 410 edges and out via the perforated holes in the tool surface (i.e., through temperature control channels 734), as illustrated by fluid flow path 792. With reference to FIG. 10D, in various embodiments, the temperature control fluid 740 can flow into the preform 410 via perforated holes in the tool surface (i.e., through temperature control channels 734) and out through holes on the other side of the tooling assembly (e.g., perforated holes in the tool surface of wedge 424, first plug 426, and/or second plug 428), as illustrated by fluid flow path 793.

With reference to FIG. 10E, temperature control channels 734 can be concentrated near a center of the tool surface (e.g., bottom surface 787) for mass balance and uniform heat transfer out the preform 410. In this regard, a greater percentage of the bottom surface 787 may be open to the preform 410 near the center of the bottom surface 787 (e.g., see centerline axis 798). A percentage of the open area can be reduced or adjusted as a function of the distance from centerline axis 798 and desired mass flow rate through sections of the preform 410. For example, there may be a higher concentration of temperature control channels 734 in the middle of the female forming tool 720 that decreases towards the outside edges of female forming tool 720.

The heat treatment tooling fixture arrangement 400 and its components 420, 424, 426, 428 are described above using the terms "bottom" and "top" with reference to exemplary orientations in the drawings. The present disclosure, however, is not limited to any particular formation system orientations. For example, in other embodiments, the wedge 424, first plug 426, and second plug 428 may further be configured as a bottom die and the female forming tool 420 may alternatively be configured as a top die.

After carbonization, the carbonized shaped body 416 may be densified using chemical vapor infiltration (CVI), as described in further detail below. In various embodiments, the shaped body 416 is removed from heat treatment tooling fixture arrangement 700 prior to densification. In various embodiments, the shaped body 416 is placed in a perforated graphite fixture during one or more densification runs. The shaped body 416 may be densified with pyrolytic carbon by CVI using optimized process conditions to maintain shape and support efficient carbon densification. In general, densification involves filling the voids, or pores, of the fibrous preform with additional carbon material. This may be done using the same furnace used for carbonization or a different furnace. Typically, chemical vapor infiltration and deposition ("CVI/CVD") techniques are used to densify the porous fibrous preform with a carbon matrix. This commonly involves heating the furnace and the carbonized preforms, and flowing hydrocarbon gases (e.g., at least one of methane, ethane, propane, butane, and/or the like, as described herein) into the furnace and around and through the fibrous preforms. In various embodiments, the CVI/CVD process may include a temperature gradient. In various embodiments, the CVI/CVD process may include a pressure gradient. In various embodiments, the CVI/CVD process may include a temperature and a pressure gradient. In various embodiments, additional inert, diluting, and/or inhibiting gases such as argon and hydrogen may be combined with the forementioned reactant gases to control deposition rates and morphology of the deposited compounds.

CVI/CVD densification may be conducted at an elevated temperature for a period of time in the range from about 150 hours to about 650 hours, and in various embodiments, in the range from about 300 hours to about 500 hours (wherein the term about in this context only means +/- 24 hours).

As a result, carbon from the hydrocarbon gases separates from the gases and is deposited on and within the fibrous preforms. Typically, the densification process is continued until the preform reaches a density in the range from 1.6 to 1.9 grams per cubic centimeter (g/cc), and in various embodiments, a density of approximately 1.80 g/cc. When the densification step is completed, the resulting C/C part has a carbon fiber structure with a carbon matrix infiltrating the fiber structure, thereby deriving the name "carbon/carbon."

After a first CVI/CVD cycle of about 300 to 500 hours, an intermediate heat treat is typically performed, in the same furnace. This heat treat serves to dimensionally stabilize the shaped body 416, increase its thermal properties, and increase its porosity for subsequent densification. The shaped body 416 may then be machined to open the porosity further, to help allow for final density to be achieved using only one more CVI/CVD cycle. Part densities after first machining may be in the range of 1.4 to 1.7 g/cc, depending on the part thickness, overall size, and placement within the furnace. Typical, average density range is 1.55-1.65 g/cc.

The densification process may be continued until the preform reaches a desired density, for example in the range from 1.7 to 1.9 grams per cubic centimeter (g/cc), and in various embodiments, a density of approximately 1.80 g/cc. The CVI/CVD process may be continued with the shaped body 416 removed from the perforated graphite fixture. In this manner, the outer surfaces of the shaped body 416 may be more directly exposed to the gas flow. Moreover, the shaped body 416 may be machined in between carbon CVI densification processes (e.g., between fixtured carbon CVI densification and non-fixtured carbon CVI densification and/or between successive non-fixtured carbon CVI densification processes). Machining (e.g., grinding, sanding, milling, grit blasting, etc.) the shaped body 416 may be performed to achieve a final desired part shape. Machining the shaped body 416 may be performed to expose voids, or pores, of the shaped body 416 so as to facilitate infiltration with additional carbon material during subsequent carbon CVI densification. When the densification step is completed, and the desired density is achieved, the resulting C/C part has a carbon fiber structure with a carbon matrix infiltrating the fiber structure, thereby deriving the name "carbon/carbon."

Following the CVI/CVD densification process, the C/C part may undergo a final heat treatment (FHT) process. This may be done using the same furnace used for densification or a different furnace. If done using the same furnace, the flow of hydrocarbon gases would be stopped following the end of the densification process and the temperature increased. FHT may be conducted in a vacuum or partial vacuum (e.g., at pressures of 1-15 torr) or in an inert atmosphere at an elevated temperature for a period of time in the range from about 4 hours to about 14 hours, and in various embodiments, in the range from about 8 hours to about 12 hours (wherein the term about in this context only means +/- 2 hours). In various embodiments, the FHT process imparts high temperature dimensional stability to the final C/C part. In various embodiments, the FHT process imparts desired thermal properties associated with thermal shock such as high thermal conductivity, high heat capacity, and/or high emissivity.

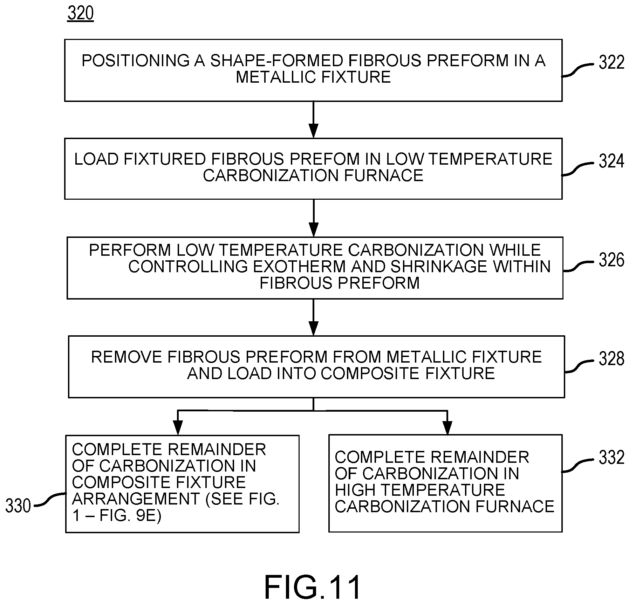

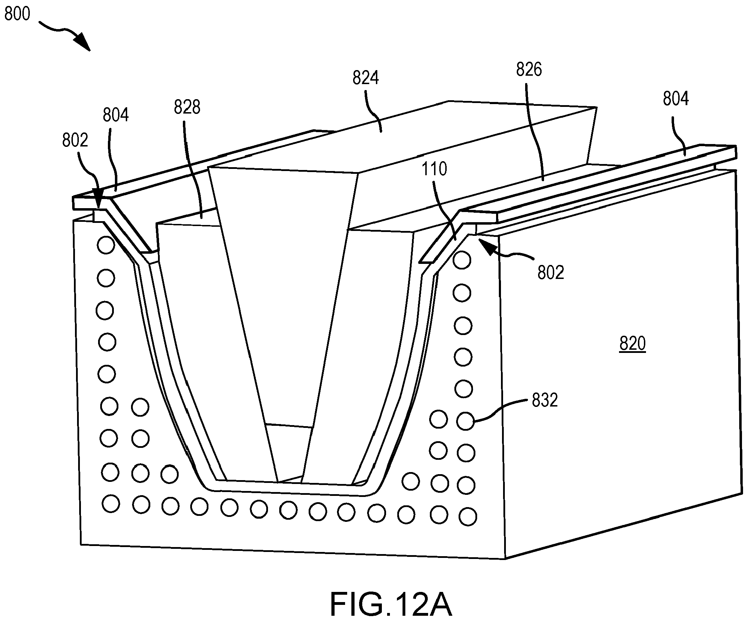

FIG. 11 is a flow chart for a method 320 for a two-part carbonization process of a fibrous preform, in accordance with various embodiments. For ease of description, the method 320 is described below with reference to FIG. 12A through FIG. 12C. The method 320 of the present disclosure, however, is not limited to use of the exemplary metallic fixture arrangement 100 of FIG. 12A through FIG. 12C.

With reference to FIG. 12A, a metallic heat treatment tooling fixture arrangement 800 is illustrated in accordance with various embodiments. Metallic heat treatment tooling fixture arrangement 800 may include a female die 820 and a multi-piece wedge and plug arrangement comprising a wedge 824, a first plug 826, and a second plug 828. In various embodiments, heat treatment tooling fixture arrangement 800 is similar to heat treatment tooling fixture arrangement 400 described with respect to FIG. 4A through FIG. 7, except that the components (i.e., female die 820, wedge 824, first plug 826, and second plug 828) of heat treatment tooling fixture arrangement 800 are made of a metal alloy suitable for low carbonization temperatures. In this manner, metallic heat treatment tooling fixture arrangement 800 can further include gripper plates 804 for clamping opposing lateral ends 802 of fibrous preform 110 to female die 820. The gripper plates 804 can be configured to maintain tension on fibrous preform 110 during the carbonization process (e.g., as fibrous preform 110 shrinks during carbonization). In this manner, the use of gripper plates 804 to provide tension on fibrous preform 110 tends to minimize wrinkling and/or fiber misalignment.

In step 322, the fibrous preform 110 is positioned in metallic heat treatment tooling fixture arrangement 800. In various embodiments, fibrous preform 110 is shape formed and undergoes low temperature carbonization in fibrous preform 110; however fibrous preform 110 can be shape formed prior to being installed in heat treatment tooling fixture arrangement 800.

In step 324, the fixtured fibrous preform 110 (i.e., fibrous preform 110 installed in metallic heat treatment tooling fixture arrangement 800) is loaded into a low temperature carbonization furnace.

In step 326, a low temperature carbonization process is performed on the fixtured fibrous preform 110 in the low temperature carbonization furnace. For example, the low temperature carbonization furnace can be heated to a low carbonization temperature. During step 326, exotherm control can be performed to ensure even heating and wrinkle mitigation, for example using metallic heat treatment tooling fixture arrangement 800 as described with respect to FIG. 12A through FIG. 12C.

In various embodiments, a plurality of temperature control channels 832 can be formed into female die 820. In various embodiments, each temperature control channel 832 is configured to accept a fluid conduit and/or a fluid flow for temperature control of the female die 820 (and fibrous preform 110) during carbonization. In various embodiments, each temperature control channel 832 is configured to accept a cartridge heater for temperature control of the female die 820 (and fibrous preform 110) during carbonization. A cartridge heater may include a resistance coil wound around a ceramic core that is surround by dielectric and encased in a metal sheath. Powered heat transferred through the coil to the sheath causes the sheath to heat up. This heat is then transferred to female die 820.

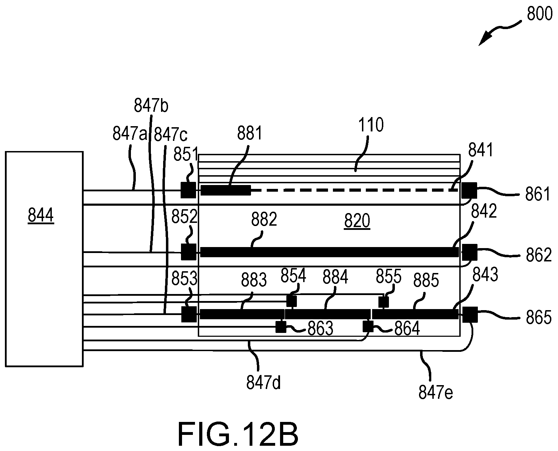

With reference to FIG. 12B, a side view of metallic heat treatment tooling fixture arrangement 800 is schematically illustrated, in accordance with various embodiments. Cartridge heaters can extend longitudinally along the length of female die 820. For example, cartridge heater 881 is illustrated extending only part way through female die 820 in temperature control channel 841. Cartridge heater 882 is illustrated extended between and to both ends of female die 820 along substantially the entire length of female die 820 in temperature control channel 842. Cartridge heaters 883, 884, and 885 are illustrated disposed in series along a single temperature control channel 843 in female die 820. In this manner, cartridge heaters can be strategically disposed in different zones of the female die 820 for zoned temperature control.

Cartridge heater 881 can have an inlet temperature sensor 851 and an outlet temperature sensor 861. Cartridge heater 882 can have an inlet temperature sensor 852 and an outlet temperature sensor 862. Cartridge heater 883 can have an inlet temperature sensor 853 and an outlet temperature sensor 863. Cartridge heater 884 can have an inlet temperature sensor 854 and an outlet temperature sensor 864. Cartridge heater 885 can have an inlet temperature sensor 855 and an outlet temperature sensor 865.

Wires 847a can extend between cartridge heater 881 and a power supply and control unit 844 for powering and controlling a temperature of cartridge heater 881. Wires 847b can extend between cartridge heater 882 and power supply and control unit 844 for powering and controlling a temperature of cartridge heater 882. Wires 847c can extend between cartridge heater 883 and power supply and control unit 844 for powering and controlling a temperature of cartridge heater 883. Wires 847d can extend between cartridge heater 888 and power supply and control unit 844 for powering and controlling a temperature of cartridge heater 884. Wires 847e can extend between cartridge heater 885 and power supply and control unit 844 for powering and controlling a temperature of cartridge heater 885.

In this manner, various zones of the fibrous preform 110 can be monitored and locally heated during low temperature carbonization as desired using the cartridge heaters to ensure even heating of fibrous preform 110.

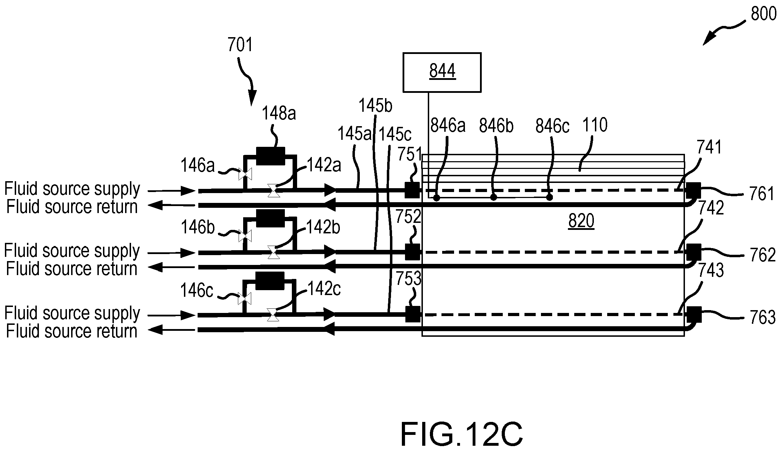

With reference to FIG. 12C, a side view of metallic heat treatment tooling fixture arrangement 800 is schematically illustrated, in accordance with various embodiments. With respect to FIG. 12C, elements with like element numbering, as depicted in FIG. 9C, are intended to be the same and will not necessarily be repeated for the sake of clarity. Metallic heat treatment tooling fixture arrangement 800 can further include a plurality of presser sensors (e.g., pressure sensor 846a, pressure sensor 846b, and pressure sensor 846c). Pressure sensor 846a, pressure sensor 846b, and pressure sensor 846c may be high temperature pressure sensors configured to withstand the low temperature carbonization temperatures. Pressure sensor 846a, pressure sensor 846b, and pressure sensor 846c may be able to indicate differences in rate of compaction in different regions of the fibrous preform 110 (e.g., due to uneven shrinkage or the like). In response to one pressure sensor reading less pressure from the male tooling than another region, heating or cooling can be directed to that area accordingly to impact the local exotherm rate. In this regard, a carbonization process of the present disclosure can include measuring a pressure with one or more pressure sensors, and varying a temperature of the fibrous preform 110 based upon the measured pressure feedback.

In step 328, fibrous preform 110 can be removed from (low temperature) metallic heat treatment tooling fixture arrangement 800 and loaded into a (high temperature) composite heat treatment tooling fixture arrangement (e.g., arrangement 100, arrangement 400, or arrangement 700 as described herein, among other composite heat treatment tooling fixture arrangements). In this regard, according to step 330, fibrous preform 110 can be moved to arrangement 100, arrangement 400, or arrangement 700, as described herein, to complete the carbonization process without the use of a high temperature carbonization furnace, in accordance with various embodiments.

In various embodiments, according to step 332, fibrous preform 110 can be moved to any suitable non-metallic (e.g., graphite or C/C composite) fixture to complete the carbonization process with the use of a high temperature carbonization furnace, in accordance with various embodiments.

Having described various exemplary tooling fixtures for heat treatment of a fibrous preform herein, it should be understood that the temperature controlled heat treatment systems of the present disclosure can be used with various tooling fixtures. For example, and particularly with respect to temperature control using metallic tooling fixtures, principles of the present disclosure may be compatible with and/or utilize certain components or techniques disclosed in U.S. Patent application No. 17/977,913 to Waugh entitled "EXPANDABLE MALE DIE FOR MATCH DIE SHAPE-FORMING SYSTEMS AND METHODS." The '913 application is hereby incorporated by reference in its entirety for all purposes (but except for any subject matter disclaimers or disavowals, and except to the extent that the incorporated material is inconsistent with the express disclosure herein, in which case the language in this disclosure shall control).

Systems and methods are provided. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Benefits, other advantages, and solutions to problems have been described herein with regard to specific embodiments. However, the benefits, advantages, solutions to problems, and any elements that may cause any benefit, advantage, or solution to occur or become more pronounced are not to be construed as critical, required, or essential features or elements of the invention. The scope of the invention is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Furthermore, no element, component, or method step in the present disclosure is intended to be dedicated to the public regardless of whether the element, component, or method step is explicitly recited in the claims. No claim element herein is intended to invoke 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A zoned heat treatment tooling fixture arrangement, comprising:
a heat treatment tooling fixture configured to receive a fibrous preform;
at least one zone, wherein each zone comprises:
a plurality of temperature control channels disposed in the heat treatment tooling fixture and configured to receive a fluid for regulating a temperature of the fibrous preform;
an inlet temperature sensor configured to measure an inlet temperature of the fluid entering the plurality of temperature control channels;
an outlet temperature sensor configured to measure an exit temperature of the fluid exiting the plurality of temperature control channels; and
a controller configured to receive a first signal from the inlet temperature sensor and a second signal from the outlet temperature sensor, wherein the first signal corresponds to the inlet temperature of the fluid entering the plurality of temperature control channels and the second signal corresponds to the exit temperature of the fluid exiting the plurality of temperature control channels;
wherein the controller is configured to monitor the first signal and the second signal for regulating at least one of:
a flow rate of the fluid; or
a temperature of the fluid.

2. The zoned heat treatment tooling fixture arrangement of claim 1, wherein the fluid comprises at least one of an inert gas or a byproduct from a chemical conversion of an oxidized polyacrylonitrile fiber to carbon.

3. The zoned heat treatment tooling fixture arrangement of claim 1 or 2, wherein the at least one zone comprises a first zone and a second zone;
wherein the first zone comprises:
a first plurality of temperature control channels disposed in the heat treatment tooling fixture and configured to receive a first fluid for regulating a first temperature of the fibrous preform;
a first inlet temperature sensor configured to measure an inlet temperature of the first fluid entering the first plurality of temperature control channels; and
a first outlet temperature sensor configured to measure an exit temperature of the first fluid exiting the first plurality of temperature control channels;
wherein the second zone comprises:
a second plurality of temperature control channels disposed in the heat treatment tooling fixture and configured to receive a second fluid for regulating a second temperature of the fibrous preform;
a second inlet temperature sensor configured to measure an inlet temperature of the second fluid entering the second plurality of temperature control channels; and
a second outlet temperature sensor configured to measure an exit temperature of the second fluid exiting the second plurality of temperature control channels;
wherein the controller is further configured to receive a third signal from the second inlet temperature sensor and a fourth signal from the second outlet temperature sensor, wherein the third signal corresponds to the inlet temperature of the second fluid entering the second plurality of temperature control channels and the fourth signal corresponds to the exit temperature of the second fluid exiting the second plurality of temperature control channels.

4. The zoned heat treatment tooling fixture arrangement of claim 3, wherein the controller is further configured to monitor the third signal and the fourth signal for regulating at least one of:
the flow rate of the first fluid;
the temperature of the first fluid;
a flow rate of the second fluid; or
a temperature of the second fluid.

5. The zoned heat treatment tooling fixture arrangement of claim 4, wherein the controller is configured to:
calculate a difference between the exit temperature of the first fluid exiting the first plurality of temperature control channels and the exit temperature of the second fluid exiting the second plurality of temperature control channels; and
based upon the difference, regulate the at least one of the flow rate of the first fluid or the temperature of the first fluid.

6. The zoned heat treatment tooling fixture arrangement of any preceding claim, wherein the controller is configured to regulate at least one of the flow rate of the first fluid or the temperature of the first fluid to evenly bring the fibrous preform to a predetermined temperature; and/or
wherein a concentration of the plurality of temperature control channels is higher near a middle of the heat treatment tooling fixture and decreases toward an outside edge of the heat treatment tooling fixture.

7. A method for performing a heat treatment process on a fibrous preform comprising oxidized polyacrylonitrile fiber, the method comprising:
positioning the fibrous preform in a heat treatment tooling fixture;
positioning the fibrous preform and the heat treatment tooling fixture such that the fibrous
preform is in an inert environment;
moving a first fluid through a first temperature control channel disposed in the heat
treatment tooling fixture to heat the fibrous preform; and
at least partially converting a fiber of the fibrous preform to carbon in response to heating
the fibrous preform with the first fluid.

8. The method of claim 7, further comprising moving a second fluid through a second temperature control channel disposed in the heat treatment tooling fixture to heat the fibrous preform.

9. The method of claim 8, further comprising:
measuring a first outlet temperature of the first fluid;
measuring a second outlet temperature of the second fluid; and
varying at least one of a flow rate or a temperature of the first fluid based on the first outlet temperature and the second outlet temperature.

10. The method of claim 7, 8, or 9, wherein the fibrous preform is heated.

11. The method of any of claims 7 to 10, wherein:
the first temperature control channel is in fluid communication with the fibrous preform;
the first fluid is directed at least partially through the fibrous preform; and
the first fluid comprises at least one of an inert gas, or a byproduct from a conversion of the oxidized polyacrylonitrile fiber to carbon.

12. The method of any of claims 7 to 11, further comprising opening a valve to direct the first fluid through a heater to heat the first fluid; and/or
wherein the method is performed externally from a heat treatment furnace.

13. A method for performing a heat treatment process on a fibrous preform comprising stabilized polyacrylonitrile fiber, the method comprising:
positioning the fibrous preform in a metallic heat treatment tooling fixture;
positioning the fibrous preform and tooling arrangement such that the fibrous preform is in
an inert environment;
moving a fluid through a first temperature control channel disposed in the metallic heat
treatment tooling fixture to control a temperature of the fibrous preform;
heating the fibrous preform to a first temperature while the fibrous preform is in the
metallic heat treatment tooling fixture to at least partially carbonize the fibrous preform;
moving the partially carbonized preform from the metallic heat treatment tooling fixture to
a non-metallic heat treatment tooling fixture; and
heating the fibrous preform to a second temperature while the fibrous preform is in the
composite heat treatment tooling fixture, wherein the second temperature is greater than the first temperature.

14. The method of claim 13, further comprising clamping opposing lateral ends of the fibrous preform to the metallic heat treatment tooling fixture; and/or
further comprising applying tension to the fibrous preform while the fibrous preform is heated to the first temperature.

15. The method of claim 13 or 14, wherein heating the fibrous preform to the first temperature is performed with a cartridge heater disposed in a second temperature control channel of the metallic heat treatment tooling fixture; and/or
further comprising opening a valve to direct the fluid through a heater, wherein heating the fibrous preform to the first temperature is performed with the fluid; and/or
further comprising:
measuring a flow rate of the fluid with a flow sensor; and
varying the flow rate to regulate the temperature of the fibrous preform.
